# EUROPEAN PATENT APPLICATION

(11) **EP 1 215 829 A2**
(43) Date of publication of application: **19.06.2002**
(21) Application number: 01129620.9
(22) Date of filing: 12.12.2001
(51) Int. Cl.: H04B 7/26

(54) **Circuit and method for frame timing detection, cell search apparatus and portable wireless terminal comprising said cell search apparatus**

(30) Priority: 14.12.2000 JP 2000380329
(71) Applicant: Sanyo Electric Co., Ltd., Moriguchi-shi, Osaka (JP)
(72) Inventor: Goto, Shoji, Gifu-shi, Gifu (JP)
(74) Representative: Glawe. Delfs. Moll

(57) **Abstract**

A frame timing detecting circuit, detecting method, cell search apparatus and a portable wireless terminal using such a cell search apparatus are provided. A frame timing detecting unit (100) of a cell search unit (70) of a portable wireless terminal calculates correlation values with all synchronization codes for each slot, deviations thereof are accumulated, and frame correlation values corresponding to scrambling code group numbers are calculated. Maximum values are detected with the slots being shifted, and slot offset number (frame timing) and the corresponding scrambling code group number are detected. Accordingly, the frame timing can be detected with high accuracy regardless of variation in the wireless propagation environment.

## Description

### BACKGROUND OF THE INVENTION

### Field of the Invention

The present invention relates to a frame timing detecting circuit, a frame timing detecting method, a cell search apparatus and a portable wireless terminal using the cell search apparatus. More specifically, the present invention relates to a frame timing detecting circuit and detecting method synchronously capturing a scrambling code for despreading at a receiving side, a cell search apparatus for cell search processing, and a portable wireless terminal including such a cell search apparatus.

### Description of the Background Art

In digital radio communication such as CDMA (Code Division Multiple Access) system, for example, direct sequence spread spectrum communication system has conventionally been employed, in which digital transmission data is scrambled by a spreading code sequence specific to each user and transmitted, and the receiving end descrambles the received digital data by a despreading code sequence.

At the transmitting end of the digital radio communication using such direct sequence spread spectrum communication system, a spreading unit is provided for generating a spreading code sequence to scramble digital transmission data. At the receiving end, a despreading unit is provided for generating a replica signal of the spreading code sequence to descramble received digital data.

In the direct sequence spread spectrum communication system, the spreading code used on the transmitting end must be identified on the receiving end, and a start timing of the spreading code on the transmitting end and a start timing of the spreading code on the receiving end must be synchronized with each other.

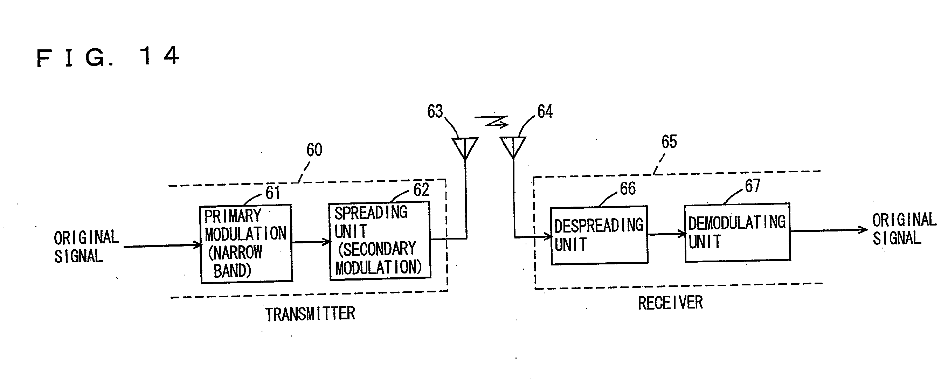

Fig. 14 is a schematic block diagram showing a basic structure of a transmitter and a receiver in the direct sequence spread spectrum communication system as discussed above.

Referring to Fig. 14, the direct sequence spread spectrum communication system is basically constituted of a transmitter 60 of a base station, and a receiver 65 of a mobile station.

In transmitter 60 of the base station, an original signal to be transmitted is supplied to a primary modulator 61 to narrow the bandwidth of the signal, so as to enable effective use of radiowaves.

An output of primary modulator 61 is supplied to a spreading unit 62 to be spread, that is, scrambled (secondary modulation) by a spreading code sequence supplied from a spreading code generating unit, not shown, provided therein.

An output of spreading unit 62 is processed as required for radio communication by a transmission circuit, not shown, and then transmitted via an antenna 63.

The signal transmitted from antenna 63 is received by an antenna 64 of receiver 65 of the mobile station, processed by a reception circuit, not shown, as required for radio reception, and then supplied to a despreading unit 66.

Despreading unit 66 despreads, that is, descrambles the received signal by a replica signal synchronized with the spreading code sequence at that receiving end, that is supplied from a spreading code generating unit, not shown, provided therein.

The original signal is thus derived from despreading unit 66 and demodulated by a demodulating unit 67.

In order to perform despreading process on receiver 65 of the mobile station in synchronization with transmitter 60 of the base station, it is necessary for despreading unit 66 of receiver 65 of the mobile station to identify the spreading code used at the spreading unit 62 of transmitter 60 of the base station and to capture the start timing thereof.

In a CDMA communication system, generally, a transmission signal is scrambled in a hierarchical manner using various spreading codes, in the transmitter of the base station side. More specifically, a plurality of symbols spread by a spreading code sequence with a short period together constitute 1 frame of a transmission signal, and by a spreading code sequence having a long period corresponding to 1 frame (hereinafter referred to as a scrambling code), the transmission signal is eventually scrambled with the frame period.

Therefore, the receiver on the mobile station side (portable wireless terminal) receiving the transmission signal must, at first, descramble the scrambling by the scrambling code. For this purpose, it is necessary to identify the scrambling code used by the base station and to detect the start timing thereof.

In a conventional CDMA mobile communication system, a base stations synchronous system utilizing GPS (Global Positioning System) has been employed. In the base stations synchronous system, each base station operate referring to time information from one common satellite, and therefore the timing for transmitting each frame of the transmission signal (timing of scramble processing) is perfectly synchronized among base stations. Therefore, what is necessary for each mobile station (portable wireless terminal) is simply to identify the scrambling code used by the base station, and it is unnecessary to detect the start timing of the scrambling code. As identification of the scrambling code is very easy as compared with the detection of the start timing, the base stations synchronous system utilizing GPS advantageously lightens the burden on each mobile station.

In order to use GPS, however, the base station must be positioned only at such location that can see through the satellite. Therefore, location of the base station is limited.

Standardization of wide-band CDMA (Wide-Band Code Division Multiple Access) system, which is a mobile communication system of the next generation, has been standardized by a project named 3rd Generation Partnership Project (3GPP). According to the wide band CDMA system specification, not the base stations synchronous system utilizing the GPS described above but a base stations asynchronous system not using the GPS is determined to be adopted. Details of such a mobile communication system of the next generation is described in 3GTS25.213v3.3.0, which is a specification of 3GPP.

In the base stations asynchronous system, different from the base stations synchronous system described above, each base station operates at an arbitrary timing independent from each other, and transmits each frame of the transmission signal after scramble processing. Thus, it is necessary for each mobile station to identify the scrambling code used by the base station and, in addition, to detect the start timing of the scrambling code.

More specifically, though the frame formats of the transmission signals from base stations are common among base stations, the timings of the head positions are not aligned. Therefore, it is necessary to detect a boundary (start timing) of the transmission signal frame in order to descramble.

More specifically, it is necessary for each mobile station to detect the start timing of the scrambling code and thereafter to specify the scrambling code. Such a series of operations is generally referred to as "cell search".

Cell search is necessary, for example, in the following situation.

First, immediately after the mobile station (portable wireless terminal) is powered on (initial synchronization), it is necessary to detect the start timing of the frame and to identify the scrambling code.

Further, when base station as a connection destination changes (a so-called hand over) as the mobile station moves, the base station which is communicating notifies mobile station of the information of the base station as a hand over destination (including scrambling code information) in advance, and therefore, it is necessary for the mobile station to detect the start timing of the frame, though it is unnecessary to identify the scrambling code.

Cell search for the mobile station of the base stations asynchronous system requires a very complicated processing to detect the start timing of the transmission signal frame (scrambling code) from a base station, and hence it takes a long time for the detection process.

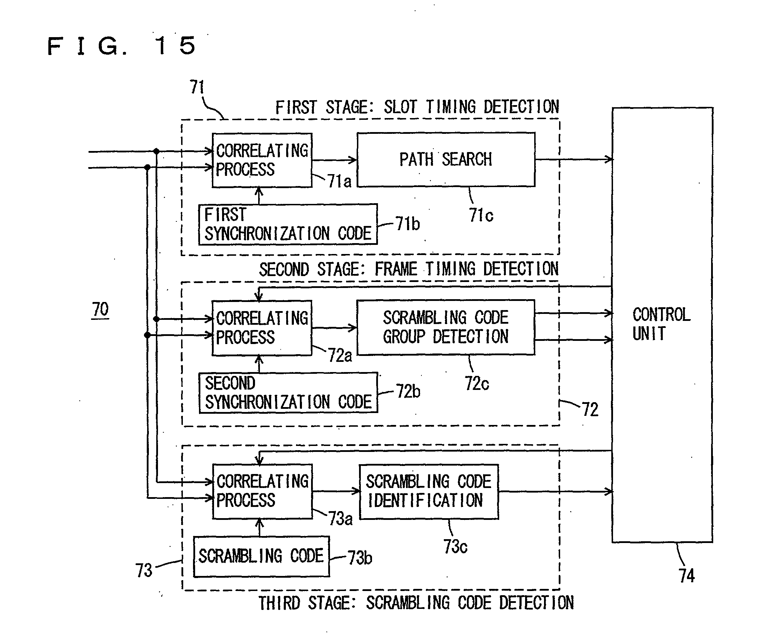

Fig. 15 is a functional block diagram representing a configuration of a cell search unit 70 performing the above described cell search process, in a mobile station of the base stations asynchronous system. Cell search unit 70 is included in despreading unit 66 of receiver 65 of the mobile station shown in Fig. 14, and it first receives the signal transmitted from the base station and generates information specifying the timing and the type of the scrambling code necessary for descrambling (despreading process).

The cell search is generally executed in a process including three steps, as shown in Fig. 15. Specifically, cell search unit 70 includes a slot timing detecting unit 71, a frame timing detecting unit 72, a scrambling code detecting unit 73 and a control unit 74.

More specifically, when it is necessary to detect the timing and to identify the type of the scrambling code at the time of initial synchronization as described above, the processing of the first stage detecting the slot timing is performed by slot timing detecting unit 71, the process of the second stage detecting the scrambling code group number and frame timing is performed by the frame timing detecting unit 72, and the process of the third stage identifying the scrambling code is performed by the scrambling code detecting unit 73.

The operation which will be described later by the configuration represented by the functional block diagram of Fig. 15 is executed in a hardware manner, or in a software manner using a digital signal processor (DSP).

In the following example, it is assumed that, in accordance with 3GPP specification, 1 frame of the transmission signal from a base station includes 15 slots, there are 512 different types of scrambling codes used for scrambling on the base station, the 512 different scrambling codes are classified into 64 scrambling code groups (each corresponding to 8 types of scrambling codes), and a synchronizing channel is arranged at every head symbol position of all the slots (each slot being formed of a plurality of symbols) constituting the frame.

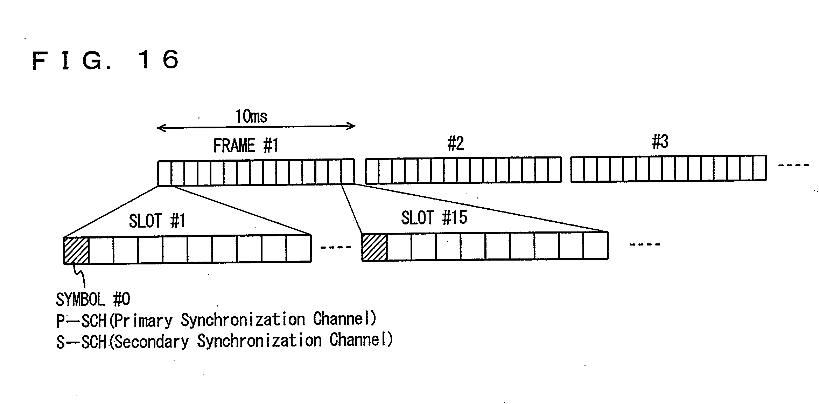

First, the process of the first stage performed by slot timing detecting unit 71 will be described. The transmission signal from a base station includes a control channel signal and an information channel signal. Fig. 16 is a schematic diagram representing a control channel signal format in accordance with the aforementioned 3GPP standard. The process of the first stage is to detect the timing of the boundary of every slot constituting a frame.

The control channel is further divided into a P-SCH (Primary Synchronization Channel) and S-SCH (Secondary Synchronization Channel). The former is referred to as a first synchronization channel and the latter is referred to as a second synchronization channel.

Here, P-SCH and S-SCH are control channels spread by spreading code sequences of 256 chips of different types (first synchronization code and second synchronization code) which are orthogonal with each other, and multiplexed with equal level (without any weight) at the head symbol position (#0) of every slot constituting the frame, as shown in Fig. 16.

More specifically, each of P-SCH and S-SCH represents a channel spread by a spreading code sequence of 256 chips formed of a code sequence of 1 and 0. At the head symbol position of each slot, the two code sequences are supplied in parallel without any weight (with same transmitting power) on the transmitting side, and a result of addition of corresponding chip positions with each other regarding 1 as -1 and 0 as +1 is transmitted at the head symbol position, as a synchronous channel signal. In other words, on the control channel signal format shown in Fig. 16, the signal is actually carried only at the head symbol position of each slot.

The head symbol position of each slot at which the synchronization channels are multiplexed is masked at the time of scrambling on the base station side, and except for the head symbol position of each slot, scrambling with a prescribed scrambling code is performed on the entire frame.

In despreading unit 66 (Fig. 14) of the receiver of the mobile station, the reception signal of the control channel is divided into I phase (in-phase component) and Q phase (quadrature component), and commonly applied to a correlation processing unit 71a of slot timing detecting unit 71, a correlation processing unit 72a of frame timing detecting unit 72 and a correlation processing unit 73a of scrambling code detecting unit 73.

In the first stage of the cell search process, slot timing detecting unit 71 detects P-SCH multiplexed at the head symbol position of each slot, so as to detect the start timing of every slot constituting the frame.

This is possible as the control channel P-SCH at the head symbol position of each slot is spread by a known spreading code (first synchronization code) of 256 chips common to all the base stations.

The I phase component and the Q phase component of the received control channel signal are correlated with the aforementioned known first synchronization code supplied from a first synchronization code generating unit 71b, respectively.

More specifically, correlation processing unit 71a includes a first digital matched filter, not shown, for calculating a correlation value between the I phase component of the received control channel signal and the first synchronization code, and a second digital matched filter, not shown, for calculating a correlation value between the Q phase component of the received control channel signal and the first synchronization code.

The digital matched filter detects, by a product-sum operation of a received signal and the spreading code, correlation value peak of these two. The digital matched filter is described in detail, for example, in Tajika, Journal of the Institute of Electronics, Information and Communication Engineers, SST62-21, "Digital Matched Filter Technique in Spread Spectrum Communication and Problems Thereof". Therefore, detailed description thereof will not be given here.

In correlation processing unit 71a, correlation value outputs of first and second digital matched filters, not shown, are power-added by an adder, not shown, and applied to a path search unit 7c.

Correlation processing unit 71a calculates the correlation value with known first synchronization code, for every slot constituting the frame, in the manner as described above. As the P-SCH spread by the first synchronization code of 256 chips is multiplexed only at the head symbol position of each slot as described above, it is the case that when the correlation value between the signal in the slot and the first synchronization code is found by the digital matched filter for each slot, a correlation value peak is obtained at the head position of the slot (though P-SCH spread by the second synchronization code is also multiplexed, the first and second synchronization codes are orthogonal with each other, and therefore, it is possible to separate and detect the correlation value peaks from each other by the digital matched filter).

The correlation value output of 1 slot obtained in this manner is stored in a memory, not shown, of the path search unit 71c.

The correlation value output is calculated in the similar manner for the next slot, and accumulated to the correlation value output of the immediately preceding slot that has been calculated and held in the memory. When such accumulation is performed for a plurality of slots, noise component is reduced by averaging process, and hence a correlation value peak position in one slot section can be detected.

The timing of the detected correlation value peak is detected as a timing of the head symbol position of the slot, that is, the slot timing, and the detected slot timing is applied to control unit 74.

The second stage process by the frame timing detecting unit 72 will be described next. The second stage process is to detect a timing of the boundary of each frame, and to detect to which of the 64 scrambling code groups the scrambling code used for scrambling the frame on the base station belongs.

In the second stage of cell search, frame timing detecting unit 72 monitors the S-SCH multiplexed at the head symbol position of each slot, to detect the frame timing and to specify the scrambling code group.

This is because the control channel S-SCH at the head symbol position of each slot is spread by one of 16 different second synchronization codes (SSC0-15) of 256 chips, different from the first synchronization code described above.

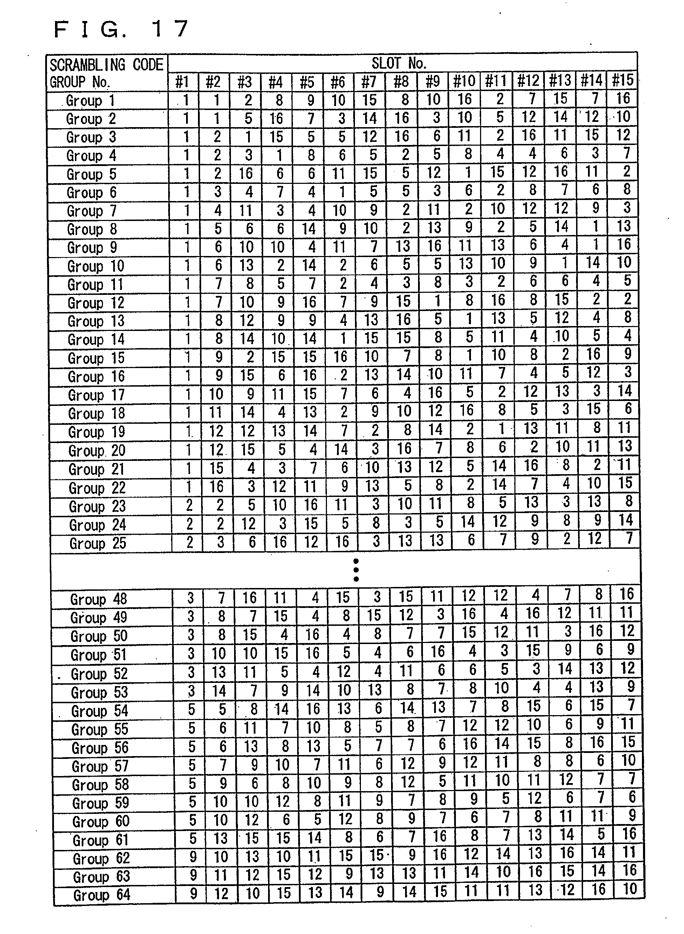

As described above, according to the 3GPP standard, there are 512 scrambling codes used for scrambling, which are classified into 64 groups, each including 8 types. Corresponding to each of 64 groups, combinations of second synchronization codes are defined, in which one of 16 different second synchronization codes is allocated to respective ones of 15 slots #1 to #15 constituting 1 frame. The table of Fig. 17 shows correspondence between the scrambling code group numbers 1-64 (ordinate) and any of 16 types of second synchronization code numbers that are allocated corresponding to the slot numbers #1 to #15 (abscissa) of 1 frame for every scrambling code group number.

More specifically, it is the case that S-SCH multiplexed at the head symbol position of respective slots #1 to #15 of 1 frame of the control channel signal transmitted from the base station is spread in accordance with the combination of the second synchronization codes corresponding to any of the scrambling code group numbers 1 to 64 shown in the table of Fig. 17.

Therefore, when it is possible to specify what combination of the second synchronization codes was used for spreading 15 slots constituting a certain frame, it is possible to specify the scrambling code group number corresponding to the combination.

In the second stage, for each of the 15 slots constituting 1 frame, correlation values with all of the 16 different types of second synchronization codes are calculated, and the results are temporarily stored. Thereafter, 64 different accumulated values of the correlation values corresponding to the combinations of the second synchronization codes for respective ones of the group numbers 1 to 64 are calculated, and that scrambling code group number which corresponds to the combination of the second synchronization codes having the largest accumulated value of the correlation values is specified from numbers 1 to 64.

Such process of the second stage will be more specifically described in the following.

First, correlation processing unit 72a of frame timing detecting unit 72 receives from control unit 74 a signal indicative of the timing of the head symbol position of each slot detected in the first stage process described above, calculates 16 different correlation values between the head symbol and all of 16 different second synchronization codes (SSC0 to 15) for each slot, and stores the calculated values in a memory, not shown, of scrambling code group detecting unit 72c.

This process is performed for each of 15 slots constituting 1 frame. All the correlation values stored in the memory as a result will be represented as C (i, j) (i= 0, 1, ..., 14, j = 0, 1, ..., 15). Here, i is a number specifying 15 slots, and j is a number specifying 16 different second synchronization data. Therefore, in the memory, there are the correlation values C (0, 0) to C (14, 15) stored therein.

Thereafter, scrambling code group detecting unit 72c calculates, in accordance with the table of combinations of the second synchronization codes shown in Fig. 17, the accumulated value of the stored correlation values of all the slots of numbers #1 to #15 calculated with the second synchronization codes of the corresponding combination, for each scrambling code group number. As it is not always the case that 15 slots as the object of accumulation start from the head of the frame (boundary) (the number of slots shifted from the boundary will be referred to as a slot offset), the slots are shifted one slot by one slot for each scrambling code group number while calculating accumulated values of correlation values of 15 slots with every shift of the slots. In this manner, for each scrambling code group number, the slots are shifted up to 14 slots while at every shift repeating accumulation of correlation values of 15 slots, whereby 15 different correlation value accumulated values (power addition values) are obtained finally.

This process is performed for every one of 64 scrambling code groups. All the power addition values stored in the memory as a result will be represented as P (l, m) (l = 0, 1, ..., 63, m = 0, 1, ..., 14). Here, l represents a number specifying 64 scrambling code groups, and m represents a number specifying the shifted number of slots (slot offset number). Therefore, it is the case that correlation values P (0, 0) to P (63, 14) are stored in the memory.

Scrambling code group detecting unit 72c calculates the maximum (largest) value Pₘₐₓ (L, M) among the thus calculated power addition values P (l, m).

The value L obtained in this manner represents the scrambling code group number to which the scrambling code necessary for descrambling the frame belongs, and M represents slot offset number to the head of the frame.

The scrambling code group number L and slot offset number M detected in this manner are applied to control unit 74.

The third stage processed by scrambling code detecting unit 73 will be described in the following. In the third stage, scrambling code detecting unit 73 performs a process for the purpose of identifying the scrambling code used at the time of transmission by the base station. Such a third stage process will be described more specifically in the following.

Correlation processing unit 73a of scrambling code detecting unit 73 first receives from control unit 74, a signal indicating the timing of the head position of the frame based on the slot offset number detected in the second stage process described above, calculates 8 different correlation values with all of 8 different scrambling codes belonging to the scrambling code group number identified in the second stage for each frame, and stores the resulting values in a memory, not shown, in scrambling code specifying unit 73c.

Scrambling code specifying unit 73c detects the maximum correlation value from 8 correlation values obtained in the above described manner, and determines whether the detected maximum value exceeds a prescribed threshold value. When it exceeds, the scrambling code as the base for calculating the maximum correlation value is identified as the scrambling code for descrambling the frame, and identification information is applied to control unit 74. When the detected maximum correlation value does not exceed the threshold value, control unit 74 determines that identification of the scrambling code is impossible, and the process is repeated starting from the detection of slot timing of the first stage.

The information is applied to despreading unit 66 of receiver 65 of the mobile station, and by the identified scrambling code, the received signal frame is descrambled.

In the conventional method of cell search described above, the scrambling code can be identified for the first time when the process of the third stage is completed, that is, whether cell search is successful or not is determined for the first time at the end of the third stage processing.

In the wireless transmission path, propagation environment changes with time, and the signal level may fluctuate significantly slot by slot. In such a reception environment, it becomes difficult to calculate accurate correlation values and to specify the scrambling code group in the second stage particularly, which may lead to a failure in identification of the scrambling code. For example, it is possible that, because of fluctuation of the received signal level, a strong correlation value is obtained for a specific slot, resulting in detection of an erroneous scrambling code group.

When identification of the scrambling code fails as described above, it is necessary to repeat the process from the first stage. Therefore, the process of cell search takes a very long time period. This eventually results in increased power consumption of the receiver of the mobile station.

### SUMMARY OF THE INVENTION

Therefore, an object of the present invention is to provide a frame timing detecting circuit, a frame timing detecting method, a cell search apparatus and a portable wireless terminal using the cell search apparatus, which reduces time necessary for cell search and prevents increase in power consumption of the mobile station (portable wireless terminal) by improving detection accuracy in the second stage of cell search.

The present invention provides a frame timing detecting circuit detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the frame timing detecting circuit including: slot correlation value calculating means for calculating a plurality of slot correlation values using the plurality of different synchronization codes for each of the plurality of slots; first storing means for storing the plurality of slot correlation values of respective ones of the plurality of slots; frame correlation value calculating means for calculating a plurality of frame correlation values, by shifting the slots and at every shifting, accumulating the plurality of slot correlation values corresponding to respective ones of a plurality of combinations of the synchronization codes, among the plurality of slot correlation values of respective ones of the plurality of slots stored in the first storing means; maximum value detecting means for detecting, by shifting the slots, a maximum value among the plurality of frame correlation values calculated at every shift; second storing means for storing, by shifting the slots, the maximum value of the frame correlation value detected at every shift; determining means for detecting the largest value among the frame correlation values stored in the second storing means, and for generating information defining a frame start timing based on corresponding shift of the slots; and deviation calculating means for performing deviation processing on the plurality of slot correlation values calculated by the slot correlation value calculating means and applying a result to the first storing means, and/or for performing deviation process on the plurality of frame correlation values calculated by the frame correlation value calculating means and applying a result to the second storing means.

Preferably, the plurality of different scrambling codes are classified into a plurality of groups corresponding to the plurality of combinations of the synchronization codes; and the determining means generates information for specifying any of the plurality of combinations of the synchronization codes corresponding to the largest one of the frame correlation values stored in the second storing means, and specifying a group of the scrambling codes corresponding to the specified combination of the synchronization codes.

According to another aspect, the present invention provides a frame timing detecting circuit detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the frame timing detecting circuit including: slot correlation value calculating means for calculating a plurality of slot correlation values using the plurality of different synchronization codes for each of the plurality of slots; first maximum value detecting means for detecting a maximum value among the plurality of slot correlation values of respective ones of the plurality of slots and for specifying combinations of synchronization codes correlated to the detected respective maximum values; first storing means for storing the specified combinations of synchronization codes; synchronization code matching means for successively comparing, by shifting the slots and at every shifting, the combinations of synchronization codes corresponding to the shifted plurality of slots stored in the first storing means with the plurality of combinations of synchronization codes, for specifying one having highest correlation with the combination of synchronization codes corresponding to the plurality of slots among the plurality of combinations of the synchronization codes; second storing means storing, by shifting the slots, a value representing the specified highest correlation specified at every shift; determining means for detecting a largest value among the values representing the highest correlation stored in the second storing means, and for generating information defining a frame start timing based on the corresponding shift of the slot; and deviation calculating means for performing a deviation processing on the plurality of slot correlation values calculated by the slot correlation value calculating means and applying a result to the first maximum value detecting means.

Preferably, the first maximum value detecting means detects a largest value of the plurality of slot correlation values of respective ones of the plurality of slots to specify a first combination of the synchronization codes corresponding to the detected respective values, and detects a second largest value to specify a second combination of the synchronization codes corresponding to the detected respective values; the first storing means stores the specified first and second combinations of the synchronization codes; and the synchronization code matching means successively compares, by shifting the slots and at every shifting, each of the first and second combinations of the synchronization codes corresponding to the plurality of shifted slots stored in the first storing means with the plurality of combinations of the synchronization codes, to specify one of the plurality of combinations of the synchronization codes that has highest correlation with the first and second combinations of the synchronization codes.

Preferably, the plurality of different scrambling codes are classified into a plurality of groups corresponding to the plurality of combinations of the synchronization codes; and the determining means generates information for specifying any of the plurality of combinations of the synchronization codes corresponding to the largest one of the values representing the highest correlation stored in the second storing means and for specifying a group of the scrambling codes corresponding to the specified combination of the synchronization codes.

According to a still another aspect, the present invention provides a frame timing detecting method detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the method including the steps of: calculating a plurality of slot correlation values using the plurality of different synchronization codes for each of the plurality of slots; storing the plurality of slot correlation values of respective ones of the plurality of slots; calculating a plurality of frame correlation values, by shifting the slots and at every shifting, accumulating the plurality of slot correlation values corresponding to respective ones of a plurality of combinations of the synchronization codes, among the plurality of slot correlation values of respective ones of the stored plurality of slots; detecting, by shifting the slots, a maximum value among the plurality of frame correlation values calculated at every shift; storing, by shifting the slots, the maximum value of the frame correlation value detected at every shift; detecting the largest value among the stored frame correlation values, and generating information defining a frame start timing based on corresponding shift of the slots; and performing deviation processing on the plurality of slot correlation values to be stored and/or performing deviation processing on the plurality of frame correlation values to be stored.

Preferably, the plurality of different scrambling codes are classified into a plurality of groups corresponding to the plurality of combinations of the synchronization codes; and the step of generating the frame start timing generates information for specifying any of the plurality of combinations of the synchronization codes corresponding to the largest one of the stored frame correlation values, and specifying a group of the scrambling codes corresponding to the specified combination of the synchronization codes.

According to a still further aspect, the present invention provides a frame timing detecting method detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the method including the steps of: calculating a plurality of slot correlation values using the plurality of different synchronization codes for each of the plurality of slots; detecting a maximum value among the plurality of slot correlation values of respective ones of the plurality of slots and specifying combinations of synchronization codes correlated to the detected respective maximum values; storing the specified combinations of synchronization codes; successively comparing, by shifting the slots and at every shifting, the combinations of synchronization codes corresponding to the stored shifted plurality of slots with the plurality of combinations of synchronization codes, and specifying one having highest correlation with the combination of synchronization codes corresponding to the plurality of slots among the plurality of combinations of the synchronization codes; storing, by shifting the slots, a value representing the specified highest correlation specified at every shift; detecting a largest value among the stored values representing the highest correlation, and generating information defining a frame start timing based on the corresponding shift of the slot; and performing a deviation processing on the plurality of slot correlation values as objects of the maximum value detection.

More preferably, the step of detecting a maximum value among the plurality of slot correlation values detects a largest value of the plurality of slot correlation values of respective ones of the plurality of slots to specify a first combination of the synchronization codes corresponding to the detected respective values, and detects a second largest value to specify a second combination of the synchronization codes corresponding to the detected respective values; the step of storing the specified combinations of synchronization codes stores the specified first and second combinations of the synchronization codes; and the step of specifying one having highest correlation successively compares, by shifting the slots and at every shifting, each of the first and second combinations of the synchronization codes corresponding to the stored plurality of shifted slots with the plurality of combinations of the synchronization codes, to specify one of the plurality of combinations of the synchronization codes that has highest correlation with the first and second combinations of the synchronization codes.

More preferably, the plurality of different scrambling codes are classified into a plurality of groups corresponding to the plurality of combinations of the synchronization codes; and the step of generating information defining a frame start timing generates information for specifying any of the plurality of combinations of the synchronization codes corresponding to the largest one of the stored values representing the highest correlation, and specifying a group of the scrambling codes corresponding to the specified combination of the synchronization codes.

According to a still further aspect, the present invention provides a cell search apparatus detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, and specifying the scrambling codes, the plurality of different scrambling codes being classified into a plurality of groups corresponding to the plurality of combinations of the synchronization codes, the cell search apparatus including: slot timing detecting means for detecting a start timing of the plurality of slots; and frame timing detecting means for detecting the start timing of the frame and for specifying a scrambling code group to which the scrambling code belongs; wherein the frame timing detecting means includes slot correlation value calculating means for calculating a plurality of slot correlation values using the plurality of different synchronization codes for each of the plurality of slots the start timing of which has been detected; first storing means for storing the plurality of slot correlation values of respective ones of the plurality of slots; frame correlation value calculating means for calculating a plurality of frame correlation values, by shifting the slots and at every shifting, accumulating the plurality of slot correlation values corresponding to respective ones of a plurality of combinations of the synchronization codes, among the plurality of slot correlation values of respective ones of the plurality of slots stored in the first storing means; maximum value detecting means for detecting, by shifting the slots, a maximum value among the plurality of frame correlation values calculated at every shift; second storing means for storing, by shifting the slots, the maximum value of the frame correlation value detected at every shift; determining means for detecting the largest value among the frame correlation values stored in the second storing means, for generating information defining a frame start timing based on corresponding shift of the slots, and for generating information specifying any of the plurality of combinations of corresponding synchronization codes and specifying a group of scrambling codes corresponding to the specified combination of synchronization codes; and deviation calculating means for performing deviation processing on the plurality of slot correlation values calculated by the slot correlation value calculating means and applying a result to the first storing means, and/or for performing deviation process on the plurality of frame correlation values calculated by the frame correlation value calculating means and applying a result to the second storing means; the cell search apparatus further including scrambling code detecting means for specifying the scrambling code among the specified group of synchronization codes.

According to a still further aspect, the present invention provides a cell search apparatus detecting a start timing of a frame of a received signal sequence, the received signal sequence being divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, and specifying the scrambling codes, the plurality of different scrambling codes being classified into a plurality of groups corresponding to the plurality of combinations of the synchronization codes, the cell search apparatus including: slot timing detecting means for detecting a start timing of the plurality of slots; and frame timing detecting means for detecting the start timing of the frame and for specifying a scrambling code group to which the scrambling code belongs; wherein the' frame timing detecting means includes slot correlation value calculating means for calculating a plurality of slot correlation values using the plurality of different synchronization codes for each of the plurality of slots the start timing of which has been detected, first maximum value detecting means for detecting a maximum value among the plurality of slot correlation values of respective ones of the plurality of slots and for specifying combinations of synchronization codes correlated to the detected respective maximum values, first storing means for storing the specified combinations of synchronization codes, synchronization code matching means for successively comparing, by shifting the slots and at every shifting, the combinations of synchronization codes corresponding to the shifted plurality of slots stored in the first storing means with the plurality of combinations of synchronization codes, for specifying one having highest correlation with the combination of synchronization codes corresponding to the plurality of slots among the plurality of combinations of the synchronization codes, second storing means storing, by shifting the slots, a value representing the specified highest correlation specified at every shift, determining means for detecting a largest value among the values representing the highest correlation stored in the second storing means, for generating information defining a frame start timing based on corresponding shift of the slots, and for generating information specifying any of the plurality of combinations of corresponding synchronization codes and specifying a group of scrambling codes corresponding to the specified combination of synchronization codes, and deviation calculating means for performing a deviation processing on the plurality of slot correlation values calculated by the slot correlation value calculating means and applying a result to the first maximum value detecting means; the cell search apparatus further including scrambling code detecting means for specifying the scrambling code among the specified group of synchronization codes.

Preferably, the first maximum value detecting means detects a largest value of the plurality of slot correlation values of respective ones of the plurality of slots to specify a first combination of the synchronization codes corresponding to the detected respective values, and detects a second largest value to specify a second combination of the synchronization codes corresponding to the detected respective values; the first storing means stores the specified first and second combinations of the synchronization codes; and the synchronization code matching means successively compares, by shifting the slots and at every shifting, each of the first and second combinations of the synchronization codes corresponding to the plurality of shifted slots stored in the first storing means with the plurality of combinations of the synchronization codes, to specify one of the plurality of combinations of the synchronization codes that has highest correlation with the first and second combinations of the synchronization codes.

According to a still further aspect, the present invention provides a portable wireless terminal for digital wireless communication, including: modem means for reception for demodulating received digital data; and signal processing means for processing and outputting the signal received by the modem means for reception; wherein the received digital data is a received signal sequence divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the plurality of different scrambling codes being classified into a plurality of groups corresponding to the plurality of combinations of the synchronization codes; the modem means for reception includes a cell search apparatus for detecting a start timing of the received signal sequence and specifying the scrambling code; the cell search apparatus includes slot timing detecting means for detecting a start timing of the plurality of slots, and frame timing detecting means for detecting the start timing of the frame and for specifying a scrambling code group to which the scrambling code belongs; the frame timing detecting means includes slot correlation value calculating means for calculating a plurality of slot. correlation values using the plurality of different synchronization codes for each of the plurality of slots the start timing of which has been detected, first storing means for storing the plurality of slot correlation values of respective ones of the plurality of slots, frame correlation value calculating means for calculating a plurality of frame correlation values, by shifting the slots and at every shifting, accumulating the plurality of slot correlation values corresponding to respective ones of a plurality of combinations of the synchronization codes, among the plurality of slot correlation values of respective ones of the plurality of slots stored in the first storing means, maximum value detecting means for detecting, by shifting the slots, a maximum value among the plurality of frame correlation values calculated at every shift, second storing means for storing, by shifting the slots, the maximum value of the frame correlation value detected at every shift, determining means for detecting the largest value among the frame correlation values stored in the second storing means, for generating information defining a frame start timing based on corresponding shift of the slots, and for generating information specifying any of the plurality of combinations of corresponding synchronization codes and specifying a group of scrambling codes corresponding to the specified combination of synchronization codes, and deviation calculating means for performing deviation processing on the plurality of slot correlation values calculated by the slot correlation value calculating means and applying a result to the first storing means, and/or for performing deviation process on the plurality of frame correlation values calculated by the frame correlation value calculating means and applying a result to the second storing means; and the cell search apparatus further includes scrambling code detecting means for specifying the scrambling code among the specified group of synchronization codes.

According to a still further aspect, the present invention provides a portable wireless terminal for digital wireless communication, including: modem means for reception for demodulating received digital data; and signal processing means for processing and outputting the signal received by the modem means for reception; wherein the received digital data is a received signal sequence divided into frames each formed of a plurality of slots, each of the plurality of slots having been spread on a transmitting side by any of a plurality of combinations of a plurality of different synchronization codes of short periods, and each of the frames having been spread by any of a plurality of different scrambling codes of long periods, the plurality of different scrambling codes being classified into a plurality of groups corresponding to the plurality of combinations of the synchronization codes; the modem means for reception includes a cell search. apparatus for detecting a start timing of the received signal sequence and specifying the scrambling code; the cell search apparatus includes slot timing detecting means for detecting a start timing of the plurality of slots, and frame timing detecting means for detecting the start timing of the frame and for specifying a scrambling code group to which the scrambling code belongs; the frame timing detecting means includes slot correlation value calculating means for calculating a plurality of slot correlation values using the plurality of different synchronization codes for each of the plurality of slots the start timing of which has been detected, first maximum value detecting means for detecting a maximum value among the plurality of slot correlation values of respective ones of the plurality of slots and for specifying combinations of synchronization codes correlated to the detected respective maximum values, first storing means for storing the specified combinations of synchronization codes, synchronization code matching means for successively comparing, by shifting the slots and at every shifting, the combinations of synchronization codes corresponding to the shifted plurality of slots stored in the first storing means with the plurality of combinations of synchronization codes, for specifying one having highest correlation with the combination of synchronization codes corresponding to the plurality of slots among the plurality of combinations of the synchronization codes, second storing means storing, by shifting the slots, a value representing the specified highest correlation specified at every shift, determining means for detecting a largest value among the values representing the highest correlation stored in the second storing means, for generating information defining a frame start timing based on corresponding shift of the slots, and for generating information specifying any of the plurality of combinations of corresponding synchronization codes and specifying a group of scrambling codes corresponding to the specified combination of synchronization codes, and deviation calculating means for performing a deviation processing on the plurality of slot correlation values calculated by the slot correlation value calculating means and applying a result to the first maximum value detecting means; and the cell search apparatus further includes scrambling code detecting means for specifying the scrambling code among the specified group of synchronization codes.

Preferably, the first maximum value detecting means detects a largest value of the plurality of slot correlation values of respective ones of the plurality of slots to specify a first combination of the synchronization codes corresponding to the detected respective values, and detects a second largest value to specify a second combination of the synchronization codes corresponding to the detected respective values; the first storing means stores the specified first and second combinations of the synchronization codes; and the synchronization code matching means successively compares, by shifting the slots and at every shifting, each of the first and second combinations of the synchronization codes corresponding to the plurality of shifted slots stored in the first storing means with the plurality of combinations of the synchronization codes, to specify one of the plurality of combinations of the synchronization codes that has highest correlation with the first and second combinations of the synchronization codes.

Therefore, according to the present invention, a deviation of a plurality of slot correlation values calculated by a plurality of different synchronization codes for each slot is calculated and/or deviation of a plurality of frame correlation values calculated after reception of 1 frame is calculated, for subsequent processing. Therefore, even when propagation environment of the wireless communication path changes with time with the reception signal level significantly changing slot by slot, the process of detecting frame timing (scrambling code group) of the succeeding stage can be performed accurately with the influence of such fluctuation removed, and therefore, accuracy of cell search by the mobile station (portable wireless terminal) can be improved.

Further, in the present invention, process is performed based on two synchronization code numbers that correspond to largest and the second largest values among a plurality of correlation values calculated slot by slot, and therefore circuit scale and the amount of calculation can be reduced.

Further, in the present invention, process is performed considering not only the correlation of the synchronization code number of the sequence corresponding to the maximum correlation values of respective slots but also the correlation of the synchronization code number of the sequence corresponding to the second largest correlation values. Therefore, even when the sequence of the maximum values and the sequence of the second maximum values are inverted by some cause such as noise, it is possible to accurately detect the frame timing and the scrambling code group.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is a schematic block diagram showing an overall configuration of a portable wireless terminal of digital wireless communication, to which the frame timing detecting circuit and the cell search apparatus of the present invention are applied.
Fig. 2 is a schematic block diagram representing a frame timing detecting unit in accordance with the first embodiment of the present invention.
Fig. 3 is a block diagram representing a configuration of a deviation calculating unit 104.
Fig. 4 shows an arrangement of deviations of the correlation values stored in storing unit 105.
Fig. 5 is a block diagram representing a configuration of a frame correlation value calculating unit 106.
Fig. 6 is a block diagram representing a configuration of a deviation calculating unit 107.
Fig. 7 is a flow chart representing a process when an operation of frame timing detecting unit 100 shown in Fig. 2 is executed in a software manner using a DSP.
Fig. 8 is a functional block diagram showing a modification of the first embodiment shown in Fig. 2.
Fig. 9 is a functional block diagram showing a further modification of the first embodiment shown in Fig. 2.
Fig. 10 is a schematic block diagram representing the frame timing detecting unit in accordance with the second embodiment of the present invention.
Fig. 11 shows an arrangement of synchronization code numbers stored in storing unit 506.
Fig. 12 is a block diagram representing a configuration of a synchronization code matching unit 507.
Fig. 13 is a flow chart showing a process when an operation of frame timing detecting unit 200 shown in Fig. 10 is executed in a software manner using a DSP.
Fig. 14 is a schematic block diagram showing basic configuration of a transmitter and a receiver in a direct sequence spread spectrum communication system in accordance with the CDMA system.
Fig. 15 is a functional block diagram representing a configuration of a cell search unit 70 performing the cell search process in a mobile station of a base stations asynchronous system.
Fig. 16 is a schematic diagram representing a signal format of a control channel in accordance with 3GPP standard.
Fig. 17 is a table representing combinations of second synchronization code numbers allocated corresponding to slots of 1 frame, for every scrambling code group number.

### DESCRIPTION OF THE PREFERRED EMBODIMENTS

Embodiments of the present invention will now be described in detail with reference to the figures. In the figures, the same or corresponding portions are denoted by the same reference characters and description thereof will not be repeated.

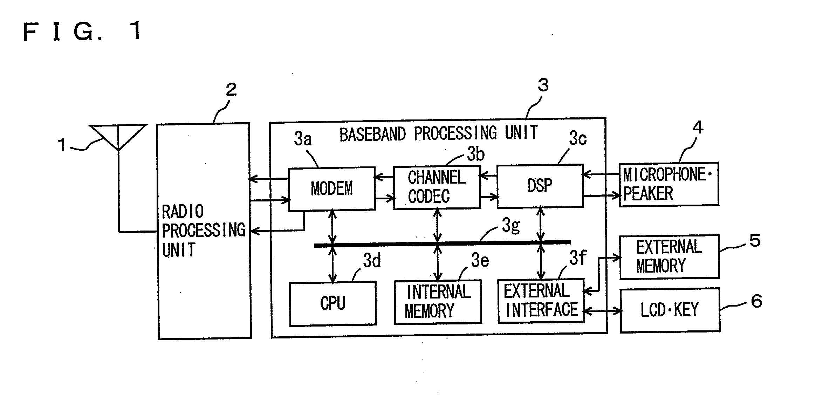

Fig. 1 is a schematic block diagram showing the overall configuration of the portable wireless terminal for digital radio communication to which the frame timing detecting circuit and the cell search apparatus of the present invention are applied.

The portable wireless terminal shown in Fig. 1 is generally constituted of an antenna 1, a radio processing unit 2, a baseband processing unit 3, a sound input/output device 4 formed of a microphone and a speaker, an external memory 5, and a display/input device 6 formed of an LCD and keys.

In particular, baseband processing unit 3 includes a modem 3a, a channel codec 3b, a DSP 3c, a CPU 3d, an internal memory 3e, an external interface 3f and an internal bus 3g.

A radiowave signal from a base station, not shown, and received by antenna 1 is converted to a baseband signal by radio processing unit 2, and applied to baseband processing unit 3.

In baseband processing unit 3, the received signal is demodulated by modem 3a, decoded by channel codec 3b and supplied to DSP 3c. DSP 3c performs data processing of the received signal, drives the speaker of sound input/output device 4 and converts the received signal into sound.

The sound input by means of the microphone of sound input/output device 4 undergoes data processing by DSP 3c to be supplied to channel codec 3b. Channel codec 3b encodes the supplied sound signal and provides the signal to modem 3a, and modem 3a modulates the transmission signal thus provided and supplies the modulated signal to radio processing unit 2. Radio processing unit 2 performs radio processing on the transmission signal and transmits the signal to a base station, not shown, via antenna 1.

Modem 3a, channel codec 3b and DSP 3c are connected via internal bus 3g to CPU 3d, internal memory 3e and external interface 3f. CPU 3d controls the entire operation of the portable wireless terminal of Fig. 1 in accordance with a program stored in internal memory 3e. External interface 3f functions as an interface with external memory 5 and displays/input device 6.

### First Embodiment

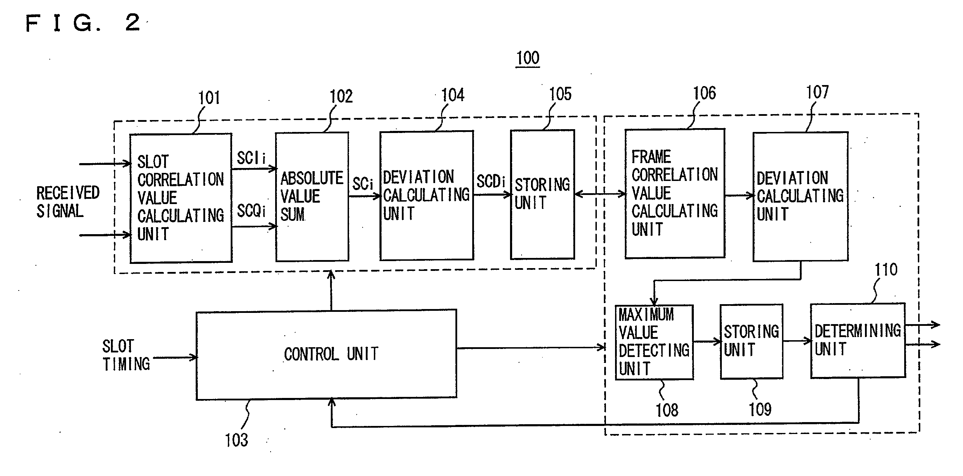

Fig. 2 is a schematic block diagram representing the frame timing detecting circuit in accordance with the first embodiment of the present invention applied to the portable wireless terminal shown in Fig. 1. The circuit shown in Fig. 2 corresponds to frame timing detecting unit 72 of the second stage of cell search unit 70 shown in Fig. 15, and it will be referred to as frame timing detecting unit 100 hereinafter. In the first embodiment of the present invention, the first and third stages of cell search are the same as the first stage performed by the slot timing detecting unit 71 and the third stage performed by the scrambling code detecting unit 73 shown in Fig. 15, and therefore, descriptions of the first and third stages will not be repeated.

More specifically, to the slot timing detecting unit 71 of the first stage and the scrambling code detecting unit 73 of the third stage shown in Fig. 15, the frame timing detecting unit 100 in accordance with the first embodiment of the present invention is added as the second stage, whereby the cell search unit (cell search apparatus) in accordance with the first embodiment of the present invention is implemented.

Here, it is assumed that despreading unit 66 (and cell search unit 70 of Fig. 15 included therein) as well as demodulating unit 67 of receiver 65 of the mobile station shown in Fig. 14 generally constitute the modem unit (not shown) for reception in modem 3a of baseband processing unit 3 of the portable wireless terminal shown in Fig. 1, and frame timing detecting unit 100 (included in cell search unit 70 of Fig. 15) of the first embodiment shown in Fig. 2 is also included in the modem unit for reception.

In the embodiments described in the following, as in the prior art example described above, it is assumed that 1 frame of the transmission signal from the base station includes 15 slots, 512 different types of scrambling codes are used for scrambling on the base station side, the 512 different scrambling codes are classified into 64 scrambling code groups (each corresponding to 8 different types of scrambling codes), and the synchronization channel is arranged at the head symbol position of every slot (each slot being formed of a plurality of symbols) constituting the frame.

The frame timing detecting unit 100 shown in Fig. 2 includes a slot correlation value calculating unit 101, an absolute value sum calculating unit 102, a deviation calculating unit 104, a storing unit 105, a frame correlation value calculating unit 106, a deviation calculating unit 107, a maximum value detecting unit 108, a storing unit 109, a determining unit 110, and a control unit 103.

The process of the second stage of cell search in accordance with the first embodiment shown in Fig. 2 will be described. The second stage process is, as in the prior art described above, to detect the timing of the boundary frame by frame, and to detect to which of 64 scrambling code groups the scrambling code used for scrambling the frame belongs.

Control unit 103 mainly controls operation timings of various portions of frame timing detecting unit 100. Control unit 103 receives a slot timing signal indicative of the timing of the head symbol of each slot applied from slot timing detecting unit 71 of the first stage shown in Fig. 15 and sets a flag signal which assumes, for example, "1" only in the head symbol section of each slot and "0" in other sections.

While the flag signal of "1" is set, control unit 103 turns and keeps on the slot correlation value calculating unit 101, absolute value sum calculating unit 102, deviation calculating unit 104 and storing unit 105.

Further, control unit 103 set a flag signal that assumes "1" when 15 slots of a slot timing signal are received, that is, after 1 frame is received, and assumes "0" in other sections.

While the flag signal of "1" is set, control unit 103 turns and keeps on the frame correlation value calculating unit 106, deviation calculation unit 107, maximum value detecting unit 108, storing unit 109 and determining unit 110.

Slot correlation value calculating unit 101 calculates 16 correlation values between each of I phase component and Q phase component of the received signal and 16 different second synchronization codes (SSCᵢ: i = 1, 2, ..., 16) in accordance with an instruction from control unit 13 that receives the slot timing signal, and applies 16 correlation values SCIᵢ corresponding to the I phase component and 16 correlation values SCQᵢ corresponding to the Q phase component, to absolute value sum calculating unit 102. In the following description, the second synchronization code will be simply referred to as the synchronization code (which is distinguished from the first synchronization code of the first stage shown in Fig. 15).

The absolute value sum calculating unit 102 converts 16 correlation values input separately for each of I phase and Q phase to absolute values, add pairs (SCIᵢ, SCQᵢ) of correlation values of I phase and Q phase to each other that have been subjected to correlation value calculation with common synchronization code SSCᵢ, and provides 16 correlation values SCᵢ.

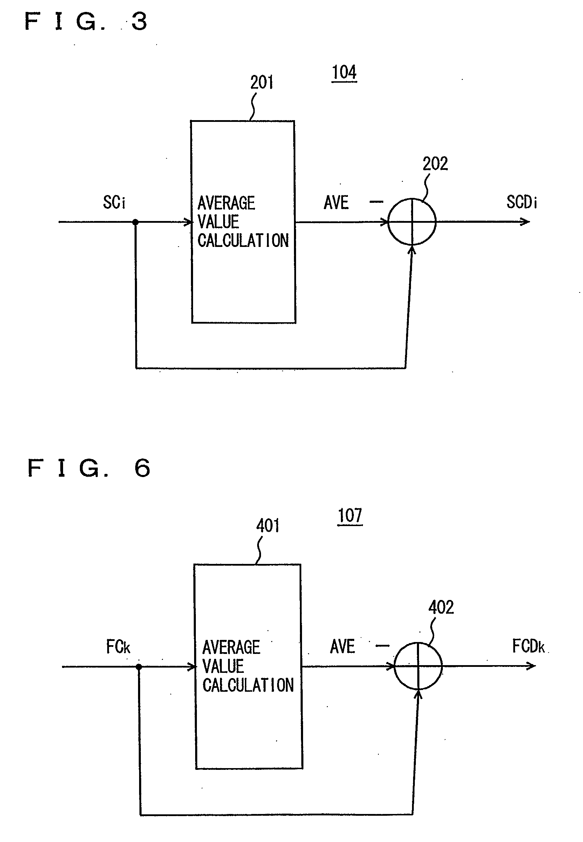

Thus provided 16 correlation value outputs SCᵢ of absolute value sum calculating unit 102 are applied to deviation calculating unit 104. Fig. 3 is a block diagram representing the configuration of deviation calculating unit 104.

Referring to Fig. 3, deviation calculating unit 104 includes an average value calculating unit 201 and a difference calculating unit 202. Deviation calculating unit 104 calculates an average value of input 16 correlation values SCᵢ at average value calculating unit 201, and calculates difference from the average value of each of 16 correlation values SCᵢ at difference calculating unit 202 so as to convert the values to 16 deviations. The deviation outputs SCDᵢ are stored successively slot by slot in storing unit 105.

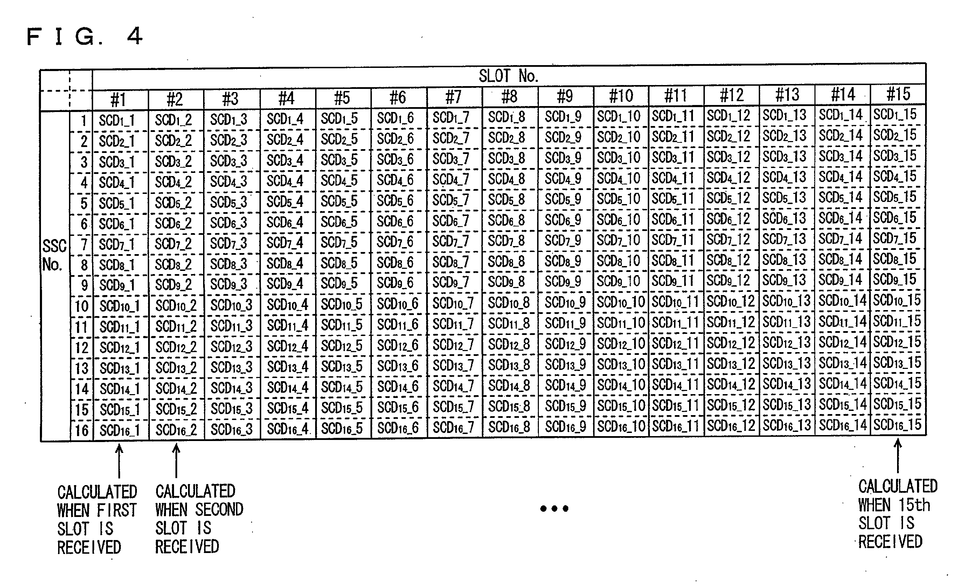

Fig. 4 shows an arrangement of the deviations of the correlation values stored in this manner in storing unit 105. Deviations SCD_{i,} j are stored in correspondence with synchronization code numbers i that specify respective ones of 16 different synchronization codes (ordinate) used for calculating the correlation values, and slot numbers j that specify respective ones of 15 slots #1 to #15 (abscissa) constituting 1 frame.

The process from slot correlation value calculating unit 101 to storing unit 105 described above is performed for every symbol section of each slot, after the start of processing by frame timing detecting unit 100. When all correlation value deviations SCDᵢ, j of 15 slots corresponding to 1 frame are stored in storing unit 105 as shown in the table of Fig. 4, control unit 103 starts processing of the next stage, so that processing by frame correlation value calculating unit 16 and circuits of the succeeding stages start.

In this stage, the above described process by slot correlation value calculating unit 101, absolute value sum calculating unit 102, deviation calculating unit 104 and storing unit 105 may be stopped.

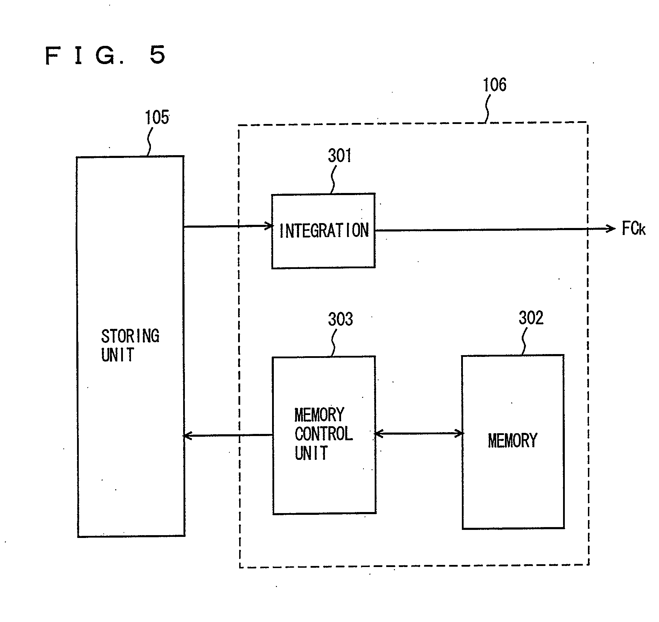

Fig. 5 is a block diagram representing a configuration of frame correlation value calculating unit 106. Referring to Fig. 5, frame correlation value calculating unit 106 includes an integrating unit 301, a memory 302 and a memory control unit 303.

Memory 302 stores a table of combinations formed by (second) synchronization code numbers allocated corresponding to the slots of 1 frame for each of the scrambling code group numbers shown in Fig. 17. Integrating unit 301 selectively accumulates correlation value deviations corresponding to respective slots stored as shown in Fig. 4 in storing unit 105, based on the table of Fig. 17 held in memory 302, in accordance with the combinations of synchronization codes determined for each of the scrambling code groups, and calculates 64 different frame correlation values FCₖ (k = 1, 2, ..., 64) that correspond to 64 scrambling code groups, respectively.

More specifically, memory control unit 303 operates such that a synchronization code number is read from the combination table of Fig. 17 stored in memory 302 and a corresponding correlation value deviation is read from storing unit 105 based thereon to be applied to integrating unit 301.

The process for calculating the frame correlation value is executed for every one of 64 scrambling code groups and every one of 15 slots. The basic process, however, is common to all the scrambling code groups. Therefore, the process will be described in detail taking a scrambling code group No. 1 as an example.

Refer to the row of Group 1 in the table of Fig. 17. For slot #1, the first synchronization code SSC₁ is designated as the spreading code. Therefore, the value stored in the first column and first row of the arrangement table of correlation value deviations shown in Fig. 4, that is, the correlation value deviation SCD₁, 1 calculated using the first synchronization code SSC₁ when slot #1 is received, is read from storing unit 105 and applied to integrating unit 301.

Next, in slot #2, first synchronization code SSC₁ is designated as the spreading code, in the similar manner. Therefore, the value stored in the second column, first row of the arrangement table of correlation value deviations, that is, the correlation value deviation SCD₁, 2 calculated using the first synchronization code SSC₁ when slot #2 is received, is read from storing unit 105 and applied to integrating unit 301, where it is accumulated to the previously read correlation value deviation SCD₁, 1.

Thereafter, reading and accumulation of the correlation value deviations are repeated in the similar manner up to slot #15, and the value finally obtained by accumulation at integrating unit 305 is output as a frame correlation value FC₁ corresponding to scrambling code group No. 1, from frame correlation value calculating unit 106.

Though scrambling code group No. 1 has been described, frame correlation values FC₂ to FC₆₄ are obtained by the similar processing for remaining scrambling code group Nos. 2 to 64, and output from frame correlation value calculating unit 106.

Thus obtained 64 frame correlation values FCₖ (k = 1, 2, ..., 64) are applied to deviation calculating unit 107 of the succeeding stage.

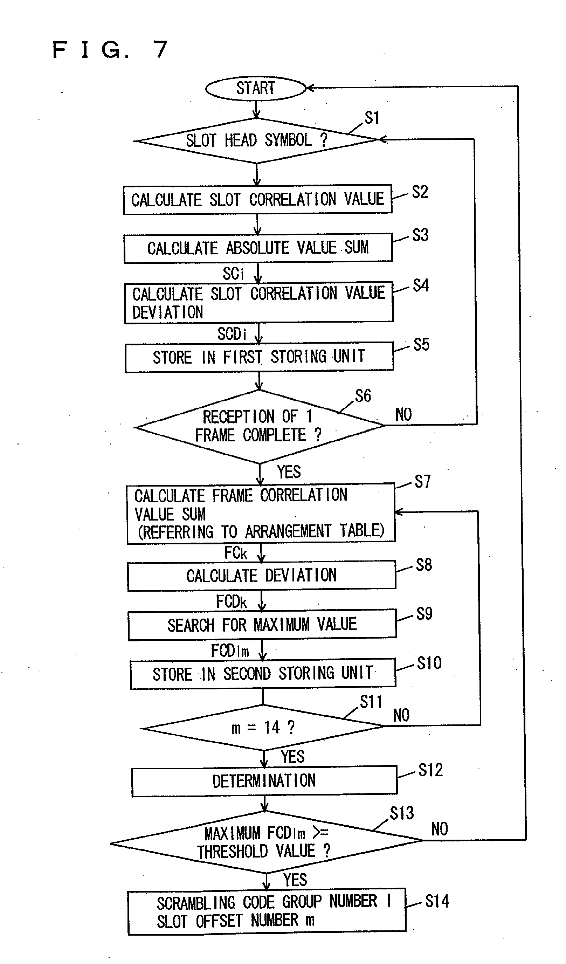

Fig. 6 is a block diagram representing a configuration of deviation calculating unit 107. Referring to Fig. 6, deviation calculating unit 107 includes an average value calculating unit 401 and a difference calculating unit 402. Deviation calculating unit 107 calculates an average value of input 64 frame correlation values FCₖ at average value calculating unit 401, and calculates a difference between each of 64 frame correlation values FCₖ and the average value at difference calculating unit 402, and converts the differences to 64 deviations. The deviation output FCDₖ is input to maximum value detecting unit 108 of the succeeding stage.

Maximum value detecting unit 108 detects a maximum (largest) value FCDₗ of the applied 64 deviations FCDₖ, and the maximum value FCD₁ and the corresponding scrambling code group number 1 are stored in storing unit 109 of the succeeding stage.

Here, on the mobile station side, the frame start timing (frame boundary) of the transmission signal is actually unknown, and therefore, it is not known how many slots the slot for starting the process of accumulating the correlation value for each slot at the frame correlation value calculating unit 106 is shifted from the frame timing (slot offset number).

Therefore, it is further necessary to detect the maximum correlation value deviation FCD_{l, m} (m = 0, 1, ..., 14) and the corresponding scrambling code group number lₘ, when the slot offset number is 1, 2, ... 14.

Frame correlation value calculating unit 106, deviation calculating unit 107 and maximum value detecting unit 108 detect the maximum correlation value deviation FCD_{l, m} and scrambling code group number lₘ for each of 15 cases with the slot offset number being 1 to 14, while shifting slot by slot, and the results are stored in storing unit 109. Namely, storing unit 109 stores a total of 15 sets of maximum correlation value deviation and the corresponding scrambling code group number.

Determining unit 110 detects the maximum one of 15 maximum correlation value deviations FCD_{l, m} stored in storing unit 109, and compares the detected value with a prescribed threshold value. When it is determined to be exceeding the threshold value, determining unit 110 applies the corresponding scrambling code group number 1 and the slot offset number m for determining the frame timing, to scrambling code detecting unit 73 of the third stage of cell search, shown in Fig. 15.

When it is determined to be not exceeding the threshold value, determining unit 110 applies a signal indicative of scrambling code group detection failure to control unit 103. Receiving this signal, control unit 103 executes the above described control for detecting the frame timing again, from the reception slot thereafter.

In case of scrambling code group detection failure, the number of repetition of the above described control is variable. Detection accuracy, however, is not always improved when the number of repetition is large. Repetition up to three times may be desirable. When the scrambling code group is still not detected, the process returns to the first stage of cell search, to start again from the detection of slot timing by slot timing detecting unit 71 of Fig. 15.

Fig. 7 is a flow chart representing a process when the operation of frame timing detecting unit 100 shown in Fig. 2 is executed in a software manner, using a DSP.

Referring to Fig. 7, in step S1, when it is determined by the slot timing signal from slot timing detecting unit 71 of Fig. 15 that the timing is in the slot head symbol section, slot correlation values are calculated for I phase component and Q phase component of the received signal in step S2.

Next, in step S3, absolute value sum SCᵢ of these two is calculated, in step S4, the slot correlation value deviation SCDᵢ is calculated, and the result is stored in storing unit 105 in step S5.

Thereafter, until calculation of slot correlation value deviations of 15 slots corresponding to 1 frame is complete in step S6, the process of steps S1 to S6 is repeated.

When it is determined that all the slot correlation value deviations have been calculated for 1 frame (15 slots) in step S6, in step S7, the slot correlation value deviations stored in storing unit 105 (see arrangement table of Fig. 4) are accumulated, based on the combination table of synchronization codes of Fig. 17 stored in memory 302, and frame correlation value sum FCₖ is calculated for each of 64 scrambling code groups.

Thereafter, in step S8, deviations FCDₖ of frame correlation value sums are calculated, and in step S9, the maximum value FCD_{l, m} is detected therefrom, and stored in storing unit 109 in step S10.

Until the slot offset number m reaches 14 in step S11, the process of steps S7 to S11 is repeated.

When it is determined in step S11 that the maximum value FCD_{l, m} has been detected for every slot offset number, the maximum FCD_{l, m} is determined in step S12, and whether the value exceeds a prescribed threshold value or not is determined in step S13.

When it is determined in step S13 that the threshold value is exceeded, the corresponding scrambling code group number and the slot offset number are determined in step S14. When it is determined in step S13 that the threshold value is not exceeded, the process of steps S1 to S13 is repeated, up to a prescribed number of times, until the threshold value is exceeded.

In the process of specifying the frame timing and the scrambling code group in accordance with the first embodiment shown in the functional block diagram of Fig. 2 and the flow chart of Fig. 7, deviation of 16 slot correlation values calculated by 16 different synchronization codes is taken for each slot and used for the subsequent processing. Therefore, even when propagation environment in the wireless transmission path fluctuates with time and the received signal level changes significantly slot by slot, the frame correlation value can be calculated exactly in the succeeding stage with the influence of fluctuation removed, and hence accuracy in detecting the frame timing and the scrambling code group can be improved.

Further, in the first embodiment, as deviation of 64 frame correlation values calculated after reception of 1 frame (15 slots) is taken and used for subsequent processing, variation among correlation values with respect to a prescribed threshold can be removed, enabling more accurate detection of the frame timing and the scrambling code group.

Though deviation of slot correlation value and deviation of frame correlation value are both calculated in the first embodiment, calculation of only one of these may be sufficient to attain satisfactory results.

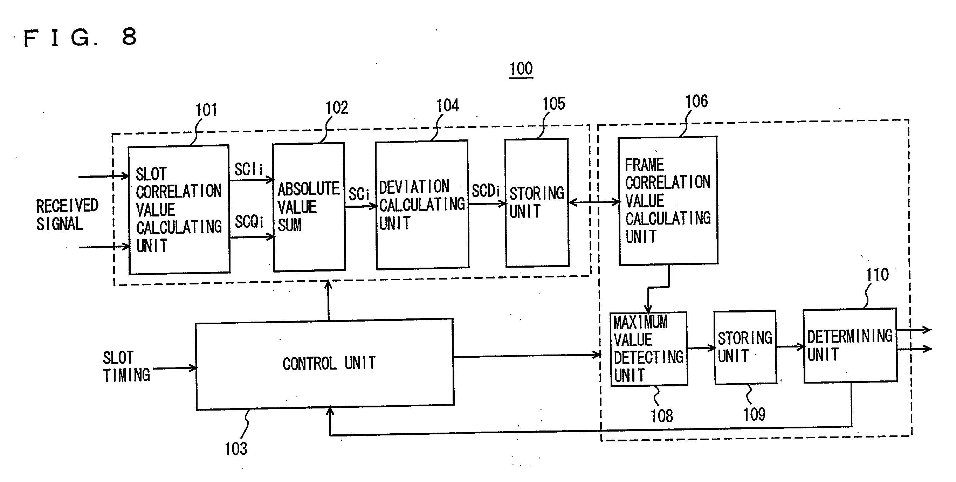

Fig. 8 is a functional block diagram representing a modification of the first embodiment shown in Fig. 2. In this example, deviation calculating unit 107 of the succeeding stage of Figs 2 is omitted. Even when the deviation calculating unit 107 of the succeeding stage is omitted, accuracy in detecting the frame timing and the scrambling code group can sufficiently be improved, when variation among slot correlation values is removed by the deviation calculating unit 104 of the preceding stage.

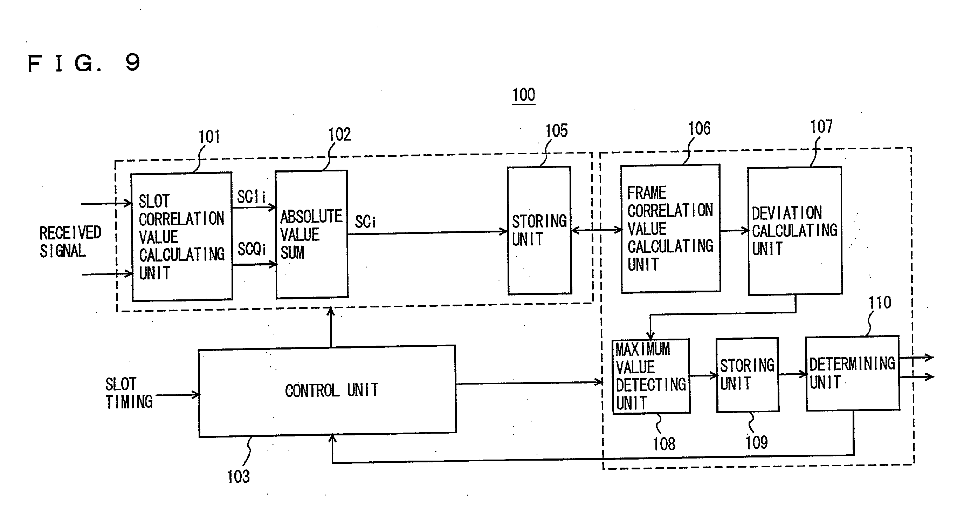

Fig. 9 is a functional block diagram representing a further modification of the first embodiment shown in Fig. 2. In this example, the deviation calculating unit 104 of the preceding stage of Fig. 2 is omitted. Even when the deviation calculating unit 104 of the preceding stage is omitted, accuracy in detecting the frame timing and the scrambling code group can sufficiently be improved when variation among frame correlation values is removed by the deviation calculating unit 107 of the succeeding stage.

### Second Embodiment

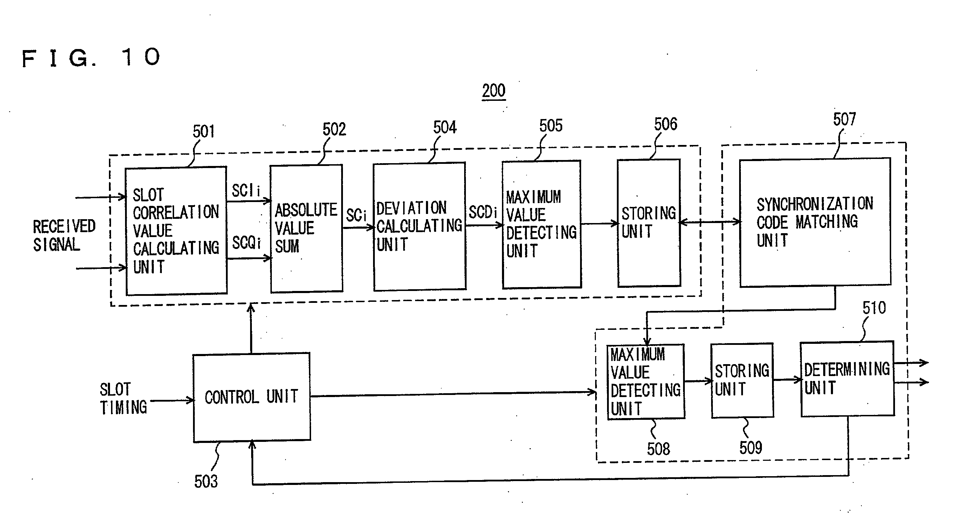

Fig. 10 is a schematic block diagram representing a frame timing detecting unit in accordance with the second embodiment of the present invention, which is applied to a portable wireless terminal shown in Fig. 1. The circuit shown in Fig. 10 corresponds to the frame timing detecting unit 72 of the second stage of cell search unit 70 shown in Fig. 15, and the circuit will be hereinafter referred to as frame timing detecting unit 200. In the second embodiment also, the first stage and the third stage of cell search are the same as the first stage performed by the slot timing detecting unit 71 and the third stage performed by the scrambling code detecting unit 73 shown in Fig. 15, and therefore descriptions of the first and third stages will not be repeated.

More specifically, to the slot timing detecting unit 71 of the first stage and the scrambling code detecting unit 73 of the third stage shown in Fig. 15, the frame timing detecting unit 200 in accordance with the second embodiment is added as the second stage, whereby the cell search unit (cell search apparatus) in accordance with the second embodiment is implemented.

Frame timing detecting unit 200 shown in Fig. 10 includes a slot correlation value calculating unit 501, an absolute value sum calculating unit 502, a deviation calculating unit 504, a maximum value detecting unit 505, a storing unit 506, a synchronization code matching unit 507, a maximum value detecting unit 508, a storing unit 509, a determining unit 510 and a control unit 503.

The process of the second stage of cell search by the second embodiment shown in Fig. 10 will be described in the following. As in the prior art described above, the second stage processing is to detect the timing of the boundary of each frame, and to detect to which of 64 scrambling code groups the scrambling code used for scrambling the frame belongs.

Slot correlation value calculating unit 501, absolute value sum calculating unit 502 and deviation calculating unit 504 correspond to slot correlation value calculating unit 101, absolute value sum calculating unit 102 and deviation calculating unit 104 of the first embodiment shown in Fig. 2. Therefore, description thereof will not be repeated.

Maximum value detecting unit 505 detects the maximum one among 16 correlation value deviations SCDᵢ (i = 1, 2, ..., 16) output slot by slot from deviation calculating unit 504, and stores the corresponding synchronization code number successively in storing unit 506, slot by slot.

Maximum value detecting unit 505 further detects the maximum one among the remaining 15 correlation value deviations, that is, the second largest correlation value deviation among 16 correlation value deviations slot by slot, and stores the corresponding synchronization code number successively in memory unit 506 slot by slot.

As a result, a combination of synchronization code numbers (sequence A) from which maximum correlation value deviations are obtained for respective ones of 15 slots and a combination of synchronization code numbers (sequence B) from which second largest correlation value deviations are obtained for respective ones of 15 slots are stored, in correspondence with the slot numbers, in storing unit 506.

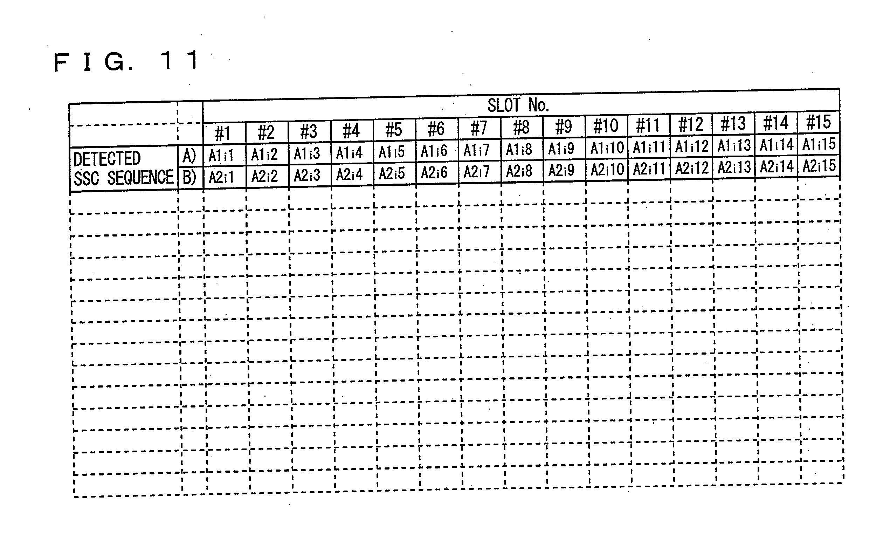

Fig. 11 is a table of arrangement representing a state in which sequences A and B are stored in correspondence with slot numbers #1 to #15. Referring to Fig. 11, synchronization code number is represented by i, slot number by l, the synchronization code number column of sequence A by A1ᵢ, l, and the synchronization code number column of sequence B is represented by A2ᵢ,l.

After receiving 15 slots corresponding to 1 frame, it follows that a total of 30 (15 × 2) synchronization code numbers of sequences A and B are stored in storing unit 506. Thereafter, the control proceeds to the process by synchronization code matching unit 507, maximum value detecting unit 508, storing unit 509 and determining unit 510. After entrance of this process, processes by slot correlation value calculating unit 501 to storing unit 506 may be stopped.

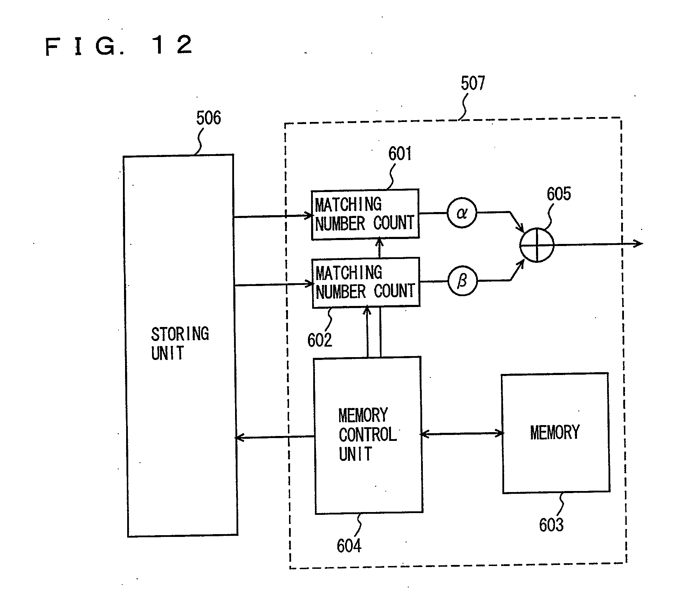

Fig. 12 is a block diagram representing the configuration of synchronization code matching unit 507 of Fig. 10. Referring to Fig. 12, synchronization code matching unit 507 includes matching number counters 601 and 602, a memory 603, a memory control unit 604 and an addition unit 605.

Memory 603 stores a table of combinations of (second) synchronization code numbers that are allocated corresponding to the slots of 1 frame, for each scrambling code group number shown in Fig. 17.

Memory control unit 604 reads a corresponding combination of synchronization code numbers for each of the scrambling code group numbers from the table shown in Fig. 17 held in memory 603, and commonly applies the read combination to one input of each of matching number counters 601 and 602.

To the other input of matching number counter 601, the synchronization code number A1i, l of sequence A is applied from storing unit 506, and to the other input of matching number counter 602, synchronization code number A2ᵢ, l of sequence B is applied from storing unit 506.

Matching number counter 601 compares each of the combinations of synchronization code numbers corresponding to 64 scrambling code groups of the table shown in Fig. 17 with the combination of synchronization code numbers of sequence A, and for each of 64 scrambling code groups, counts the number of slots M1ⱼ, of which synchronization code numbers matched. Here, j represents the scrambling code group number = 1, 2, ..., 64.

The matching number counter 602 compares each of the combinations of synchronization code numbers corresponding to 64 scrambling code groups of the table shown in Fig. 17 with the combination of synchronization code numbers of sequence B, and counts the number of slots M2ⱼ of which synchronization code numbers matched.

The elements (synchronization code numbers) of sequences A and B of an arbitrary slot number do not match each other. Further, there is the relation of 0 ≤ M1ⱼ + M2ⱼ ≤ 15.

Thereafter, for each of scrambling code group numbers, the count value M1ⱼ of matching number counter 601 is weighted with a coefficient α, the count value M2ⱼ of matching number counter 602 is weighted with the coefficient of β, and the total sum Mⱼ is given by adding unit 605 as Mⱼ = α·M1ⱼ + β·M2ⱼ. Such a calculation is executed corresponding to every one of 64 scrambling code groups.

The maximum value detecting unit 508 detects the value Mₗ that is the largest among 64 values Mⱼ input from synchronization code matching unit 507 in this manner, and stores the detected value together with the scrambling code group number l corresponding to the maximum value, in storing unit 509.

Here, actually, on the mobile station side, the start timing (frame boundary) of the frame of the transmission signal is unknown, and therefore, how many slots the start slot of the process for counting matching numbers of synchronization code numbers slot by slot by the synchronization code matching unit 507 is shifted from the frame timing (slot offset number) is unknown.

Therefore, it is further necessary to detect the maximum value M_{l, m}, (m = 0, 1, ..., 14) and the corresponding scrambling code group number lₘ, when the slot offset number is 1, 2, ... 14.

Synchronization code matching unit 507 and maximum value detecting unit 509 detect the maximum value M_{l, m}, and scrambling code group number lₘ for each of 15 cases with the slot offset number being 1 to 14, while shifting slot by slot, and stores the detected values in storing unit 509. More specifically, storing unit 509 stores a total of 15 sets of maximum values M_{l, m} and corresponding scrambling code group numbers lₘ.

Determining unit 510 detects the largest one of 15 maximum values M_{l, m} stored in storing unit 509, and compares the detected value with a prescribed threshold value. When it is determined to be exceeding the threshold value, determining unit 510 applies the corresponding scrambling code group number l and the slot offset number m for determining the frame timing, to scrambling code detecting unit 73 of the third stage of cell search shown in Fig. 15.

When it is determined to be not exceeding the threshold value, determining unit 510 applies a signal indicating scrambling code group detection failure to control unit 503. Upon reception of this signal, control unit 503 executes the above described control for detecting the frame timing again, from the following reception slot.

In case of scrambling code group detection failure, the number of repetition of the above described control is variable. Detection accuracy, however, is not always improved when the number of repetition is large. Repetition up to three times may be desirable. When the scrambling code group is still not detected, the process returns to the first stage of cell search, to start again from the detection of slot timing by slot timing detecting unit 71 of Fig. 15.

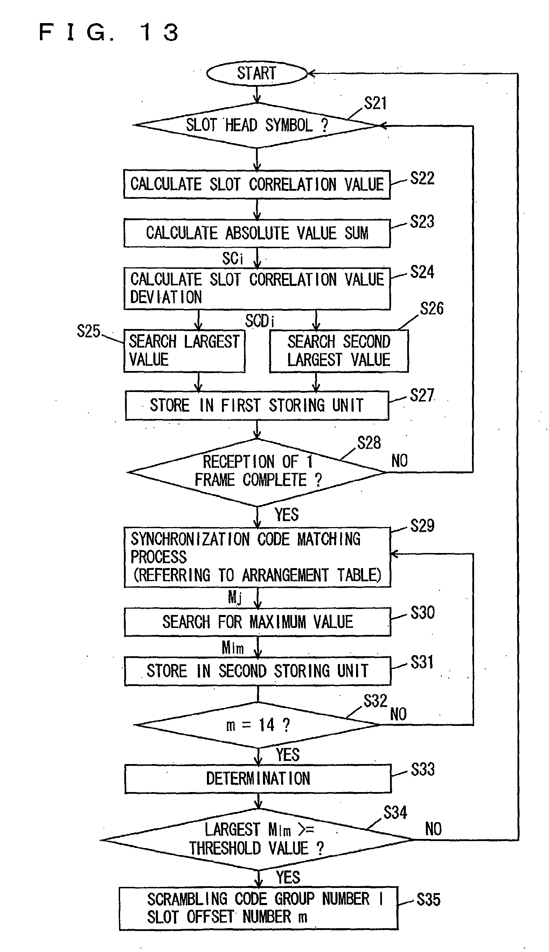

Fig. 13 is a flow chart representing a process when the operation of frame timing detecting unit 200 shown in Fig. 10 is executed in a software manner, using a DSP.

Referring to Fig. 13, in step S21, when it is determined by the slot timing signal from slot timing detecting unit 71 of Fig. 15 that the timing is in the slot head symbol section, slot correlation values are calculated for I phase component and Q phase component of the received signal in step S22.

Next, in step S23, absolute value sum SCᵢ of these two is calculated, and in step S24, the slot correlation value deviation SCDᵢ is calculated.

In step S25, the synchronization code number which results in the maximum value among the calculated slot correlation value deviations is detected, and in step S26, the synchronization code number that results in the second largest value is detected. The detected synchronization code numbers are stored in storing unit 506 in step S27.

In step S28, until the synchronization code sequence A providing the maximum correlation value deviation and the synchronization code sequence B providing the second largest value for 15 slots corresponding to 1 frame are obtained, the process from steps S21 to S28 is repeated.

When it is determined in step S28 that all the synchronization codes for sequences A and B are obtained for 1 frame (15 slots), the number of matching of synchronization code numbers of sequences A and B is counted for each of 64 scrambling code groups of the combination table of synchronization codes shown in Fig. 17 stored in memory 603, and the value Mⱼ = α·M1ⱼ + β·M2ⱼ is calculated.

In step S30, the maximum value M_{l, m} thereof is detected, and stored in storing unit 509 in step S31.

Until the slot offset number m reaches 14 in step S32, the process of steps S29 to S32 is repeated.

When it is determined in step S32 that the maximum value M_{l, m} has been detected for every slot offset number, the maximum M_{l, m} is determined in step S33, and whether the value exceeds a prescribed threshold value or not is determined in step S34.

When it is determined in step S34 that the threshold value is exceeded, the corresponding scrambling code group number and the slot offset number are determined in step S35. When it is determined in step S34 that the threshold value is not exceeded, the process of steps S21 to S34 is repeated, up to a prescribed times, until the threshold value is exceeded.

In the process of specifying the frame timing and the scrambling code group in accordance with the second embodiment shown in the functional block diagram of Fig. 10 and the flow chart of Fig. 13, deviation of 16 slot correlation values calculated by 16 different synchronization codes is taken for each slot and used for the subsequent processing. Therefore, even when propagation environment in the wireless transmission path fluctuates with time and the received signal level changes significantly slot by slot, the synchronization code matching process can be performed exactly in the succeeding stage with the influence of fluctuation removed, and hence accuracy in detecting the frame timing and the scrambling code group can be improved.

In the second embodiment, not only the number of matching of synchronization code numbers of sequence A corresponding to the maximum correlation value deviation of respective slots but also the number of matching of synchronization code numbers of sequence B corresponding to the second largest correlation value deviation are considered for processing. It is possible that the sequence of the maximum value and the sequence of the second maximum value are inverted by noise or other cause, and the above described process is to ensure accurate detection of frame timing and scrambling code group even in such a situation.

In the second embodiment, two synchronization code numbers that correspond to the largest and the second largest values of 16 correlation value deviations calculated for each slot are used for the processing, and therefore, capacity of storing unit 506 can be reduced, and the circuit scale of synchronization code matching unit 507 and succeeding stages as well as the amount of calculation can be reduced.

As described above, according to the present invention, the deviation of a plurality of slot correlation values calculated by a plurality of different synchronization codes for each slot of the received signal sequence is taken and/or deviation of a plurality of frame correlation values calculated after reception of 1 frame is taken and used for the subsequent processing. Therefore, even when propagation environment of wireless transmission path fluctuates with time and received signal levels changed significantly slot by slot, it is possible to accurately perform the process of detecting frame timing (and scrambling code group) of the succeeding stage with the influence of such fluctuation removed, and hence accuracy of cell search by the mobile station (portable wireless terminal) can be increased.

As a result, the time necessary for cell search can be reduced, and the power consumption of the portable wireless terminal is reduced.

Further, in the present invention, process is performed based on two synchronization code numbers corresponding to the largest and the second largest values among a plurality of correlation values calculated for each slot, and therefore, circuit scale and the amount of calculation can be reduced.

Further, in the present invention not only the correlation of synchronization code numbers of the sequence corresponding to the maximum correlation value but also correlation of the synchronization code numbers of the sequence corresponding to the second largest correlation value of respective slots are considered for processing. Therefore, even when the sequence of the largest value and the sequence of the second largest value should be inverted by noise or some other cause, it is possible to accurately detect the frame timing and the scrambling code group.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A frame timing detecting circuit (100) detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said frame timing detecting circuit comprising:
slot correlation value calculating means (101) for calculating a plurality of slot correlation values using said plurality of different synchronization codes for each of said plurality of slots;
first storing means (105) for storing said plurality of slot correlation values of respective ones of said plurality of slots;
frame correlation value calculating means (106) for calculating a plurality of frame correlation values, by shifting said slots and at every shifting, accumulating said plurality of slot correlation values corresponding to respective ones of a plurality of combinations of said synchronization codes, among said plurality of slot correlation values of respective ones of said plurality of slots stored in said first storing means;
maximum value detecting means (108) for detecting, by shifting said slots, a maximum value among said plurality of frame correlation values calculated at every shift;
second storing means (109) for storing, by shifting said slots, the maximum value of said frame correlation value detected at every shift;
determining means (110) for detecting the largest value among said frame correlation values stored in said second storing means, and for generating information defining a frame start timing based on corresponding shift of the slots; and
deviation calculating means (104, 107) for performing deviation processing on said plurality of slot correlation values calculated by said slot correlation value calculating means and applying a result to said first storing means, and/or for performing deviation process on said plurality of frame correlation values calculated by said frame correlation value calculating means and applying a result to said second storing means.

2. The frame timing detecting circuit according to claim 1, wherein
said plurality of different scrambling codes are classified into a plurality of groups corresponding to said plurality of combinations of the synchronization codes; and
said determining means generates information for specifying any of said plurality of combinations of the synchronization codes corresponding to the largest one of said frame correlation values stored in said second storing means, and specifying a group of the scrambling codes corresponding to said specified combination of the synchronization codes.

3. A frame timing detecting circuit (200) detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said frame timing detecting circuit comprising:
slot correlation value calculating means (501) for calculating a plurality of slot correlation values using said plurality of different synchronization codes for each of said plurality of slots;
first maximum value detecting means (505) for detecting a maximum value among said plurality of slot correlation values of respective ones of said plurality of slots and for specifying combinations of synchronization codes correlated to said detected respective maximum values;
first storing means (506) for storing said specified combinations of synchronization codes;
synchronization code matching means (507) for successively comparing, by shifting said slots and at every shifting, the combinations of synchronization codes corresponding to the shifted plurality of slots stored in said first storing means with said plurality of combinations of synchronization codes, for specifying one having highest correlation with the combination of synchronization codes corresponding to said plurality of slots among the plurality of combinations of said synchronization codes;
second storing means (509) storing, by shifting said slots, a value representing said specified highest correlation specified at every shift;
determining means (510) for detecting a largest value among said values representing the highest correlation stored in said second storing means, and for generating information defining a frame start timing based on the corresponding shift of the slot; and
deviation calculating means (504) for performing a deviation processing on said plurality of slot correlation values calculated by said slot correlation value calculating means and applying a result to said first maximum value detecting means.

4. The frame timing detecting circuit according to claim 3, wherein
said first maximum value detecting means detects a largest value of said plurality of slot correlation values of respective ones of said plurality of slots to specify a first combination of the synchronization codes corresponding to said detected respective values, and detects a second largest value to specify a second combination of the synchronization codes corresponding to said detected respective values;
said first storing means stores said specified first and second combinations of the synchronization codes; and
said synchronization code matching means successively compares, by shifting said slots and at every shifting, each of the first and second combinations of the synchronization codes corresponding to the plurality of shifted slots stored in said first storing means with said plurality of combinations of the synchronization codes, to specify one of said plurality of combinations of the synchronization codes that has highest correlation with said first and second combinations of said synchronization codes.

5. The frame timing detecting circuit according to claim 3 or 4, wherein
said plurality of different scrambling codes are classified into a plurality of groups corresponding to said plurality of combinations of the synchronization codes; and
said determining means generates information for specifying any of said plurality of combinations of the synchronization codes corresponding to the largest one of said values representing the highest correlation stored in said second storing means and for specifying a group of the scrambling codes corresponding to said specified combination of the synchronization codes.

6. A frame timing detecting method detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said method comprising the steps of:
calculating a plurality of slot correlation values using said plurality of different synchronization codes for each of said plurality of slots;
storing said plurality of slot correlation values of respective ones of said plurality of slots;
calculating a plurality of frame correlation values, by shifting said slots and at every shifting, accumulating said plurality of slot correlation values corresponding to respective ones of a plurality of combinations of said synchronization codes, among said plurality of slot correlation values of respective ones of said stored plurality of slots;
detecting, by shifting said slots, a maximum value among said plurality of frame correlation values calculated at every shift;
storing, by shifting said slots, the maximum value of said frame correlation value detected at every shift;
detecting the largest value among said stored frame correlation values, and generating information defining a frame start timing based on corresponding shift of the slots; and
performing deviation processing on said plurality of slot correlation values to be stored and/or performing deviation processing on said plurality of frame correlation values to be stored.

7. The frame timing detecting method according to claim 6, wherein
said plurality of different scrambling codes are classified into a plurality of groups corresponding to said plurality of combinations of the synchronization codes; and
said step of generating said frame start timing generates information for specifying any of said plurality of combinations of the synchronization codes corresponding to the largest one of said stored frame correlation values, and specifying a group of the scrambling codes corresponding to said specified combination of the synchronization codes.

8. A frame timing detecting method detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said method comprising the steps of:
calculating a plurality of slot correlation values using said plurality of different synchronization codes for each of said plurality of slots;
detecting a maximum value among said plurality of slot correlation values of respective ones of said plurality of slots and specifying combinations of synchronization codes correlated to said detected respective maximum values;
storing said specified combinations of synchronization codes;
successively comparing, by shifting said slots and at every shifting, the combinations of synchronization codes corresponding to the stored shifted plurality of slots with said plurality of combinations of synchronization codes, and specifying one having highest correlation with the combination of synchronization codes corresponding to said plurality of slots among the plurality of combinations of said synchronization codes;
storing, by shifting said slots, a value representing said specified highest correlation specified at every shift;
detecting a largest value among said stored values representing the highest correlation, and generating information defining a frame start timing based on the corresponding shift of the slot; and
performing a deviation processing on said plurality of slot correlation values as objects of said maximum value detection.

9. A frame timing detecting method according to claim 8, wherein
said step of detecting a maximum value among said plurality of slot correlation values detects a largest value of said plurality of slot correlation values of respective ones of said plurality of slots to specify a first combination of the synchronization codes corresponding to said detected respective values, and detects a second largest value to specify a second combination of the synchronization codes corresponding to said detected respective values;
said step of storing said specified combinations of synchronization codes stores said specified first and second combinations of the synchronization codes; and
said step of specifying one having highest correlation successively compares, by shifting said slots and at every shifting, each of the first and second combinations of the synchronization codes corresponding to the stored plurality of shifted slots with said plurality of combinations of the synchronization codes, to specify one of said plurality of combinations of the synchronization codes that has highest correlation with said first and second combinations of said synchronization codes.

10. The frame timing detecting method according to claim 8 or 9, wherein
said plurality of different scrambling codes are classified into a plurality of groups corresponding to said plurality of combinations of the synchronization codes; and
said step of generating information defining a frame start timing generates information for specifying any of said plurality of combinations of the synchronization codes corresponding to the largest one of said stored values representing the highest correlation, and specifying a group of the scrambling codes corresponding to said specified combination of the synchronization codes.

11. A cell search apparatus (70) detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, and specifying said scrambling codes, said plurality of different scrambling codes being classified into a plurality of groups corresponding to said plurality of combinations of the synchronization codes, said cell search apparatus comprising:
slot timing detecting means (71) for detecting a start timing of said plurality of slots; and
frame timing detecting means (100) for detecting the start timing of said frame and for specifying a scrambling code group to which said scrambling code belongs; wherein
said frame timing detecting means includes
slot correlation value calculating means (101) for calculating a plurality of slot correlation values using said plurality of different synchronization codes for each of said plurality of slots said start timing of which has been detected;
first storing means (105) for storing said plurality of slot correlation values of respective ones of said plurality of slots;
frame correlation value calculating means (106) for calculating a plurality of frame correlation values, by shifting said slots and at every shifting, accumulating said plurality of slot correlation values corresponding to respective ones of a plurality of combinations of said synchronization codes, among said plurality of slot correlation values of respective ones of said plurality of slots stored in said first storing means;
maximum value detecting means (108) for detecting, by shifting said slots, a maximum value among said plurality of frame correlation values calculated at every shift;
second storing means (109) for storing, by shifting said slots, the maximum value of said frame correlation value detected at every shift;
determining means (110) for detecting the largest value among said frame correlation values stored in said second storing means, for generating information defining a frame start timing based on corresponding shift of the slots, and for generating information specifying any of said plurality of combinations of corresponding said synchronization codes and specifying a group of scrambling codes corresponding to said specified combination of synchronization codes; and
deviation calculating means (104, 107) for performing deviation processing on said plurality of slot correlation values calculated by said slot correlation value calculating means and applying a result to said first storing means, and/or for performing deviation process on said plurality of frame correlation values calculated by said frame correlation value calculating means and applying a result to said second storing means;
said cell search apparatus further comprising
scrambling code detecting means (73) for specifying said scrambling code among said specified group of synchronization codes.

12. A cell search apparatus (70) detecting a start timing of a frame of a received signal sequence, the received signal sequence being divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, and specifying said scrambling codes, said plurality of different scrambling codes being classified into a plurality of groups corresponding to said plurality of combinations of the synchronization codes, said cell search apparatus comprising:
slot timing detecting means (71) for detecting a start timing of said plurality of slots; and
frame timing detecting means (100) for detecting the start timing of said frame and for specifying a scrambling code group to which said scrambling code belongs; wherein
said frame timing detecting means includes
slot correlation value calculating means (501) for calculating a plurality of slot correlation values using said plurality of different synchronization codes for each of said plurality of slots said start timing of which has been detected,
first maximum value detecting means (505) for detecting a maximum value among said plurality of slot correlation values of respective ones of said plurality of slots and for specifying combinations of synchronization codes correlated to said detected respective maximum values,
first storing means (506) for storing said specified combinations of synchronization codes,
synchronization code matching means (507) for successively comparing, by shifting said slots and at every shifting, the combinations of synchronization codes corresponding to the shifted plurality of slots stored in said first storing means with said plurality of combinations of synchronization codes, for specifying one having highest correlation with the combination of synchronization codes corresponding to said plurality of slots among the plurality of combinations of said synchronization codes,
second storing means (509) storing, by shifting said slots, a value representing said specified highest correlation specified at every shift,
determining means (510) for detecting a largest value among said values representing the highest correlation stored in said second storing means, for generating information defining a frame start timing based on corresponding shift of the slots, and for generating information specifying any of said plurality of combinations of corresponding said synchronization codes and specifying a group of scrambling codes corresponding to said specified combination of synchronization codes, and
deviation calculating means (504) for performing a deviation processing on said plurality of slot correlation values calculated by said slot correlation value calculating means and applying a result to said first maximum value detecting means;
said cell search apparatus further comprising
scrambling code detecting means (73) for specifying said scrambling code among said specified group of synchronization codes.

13. The cell search apparatus according to claim 12, wherein
said first maximum value detecting means detects a largest value of said plurality of slot correlation values of respective ones of said plurality of slots to specify a first combination of the synchronization codes corresponding to said detected respective values, and detects a second largest value to specify a second combination of the synchronization codes corresponding to said detected respective values;
said first storing means stores said specified first and second combinations of the synchronization codes; and
said synchronization code matching means successively compares, by shifting said slots and at every shifting, each of the first and second combinations of the synchronization codes corresponding to the plurality of shifted slots stored in said first storing means with said plurality of combinations of the synchronization codes, to specify one of said plurality of combinations of the synchronization codes that has highest correlation with said first and second combinations of said synchronization codes.

14. A portable wireless terminal for digital wireless communication, comprising:
modem means (3a) for reception for demodulating received digital data; and
signal processing means (3b, 3c) for processing and outputting the signal received by said modem means for reception; wherein
said received digital data is a received signal sequence divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said plurality of different scrambling codes being classified into a plurality of groups corresponding to said plurality of combinations of the synchronization codes;
said modem means for reception includes a cell search apparatus (70) for detecting a start timing of said received signal sequence and specifying said scrambling code;
said cell search apparatus includes
slot timing detecting means (71) for detecting a start timing of said plurality of slots, and
frame timing detecting means (100) for detecting the start timing of said frame and for specifying a scrambling code group to which said scrambling code belongs;
said frame timing detecting means includes
slot correlation value calculating means (101) for calculating a plurality of slot correlation values using said plurality of different synchronization codes for each of said plurality of slots said start timing of which has been detected,
first storing means (105) for storing said plurality of slot correlation values of respective ones of said plurality of slots,
frame correlation value calculating means (106) for calculating a plurality of frame correlation values, by shifting said slots and at every shifting, accumulating said plurality of slot correlation values corresponding to respective ones of a plurality of combinations of said synchronization codes, among said plurality of slot correlation values of respective ones of said plurality of slots stored in said first storing means,
maximum value detecting means (108) for detecting, by shifting said slots, a maximum value among said plurality of frame correlation values calculated at every shift,
second storing means (109) for storing, by shifting said slots, the maximum value of said frame correlation value detected at every shift,
determining means (110) for detecting the largest value among said frame correlation values stored in said second storing means, for generating information defining a frame start timing based on corresponding shift of the slots, and for generating information specifying any of said plurality of combinations of corresponding said synchronization codes and specifying a group of scrambling codes corresponding to said specified combination of synchronization codes, and
deviation calculating means (104, 107) for performing deviation processing on said plurality of slot correlation values calculated by said slot correlation value calculating means and applying a result to said first storing means, and/or for performing deviation process on said plurality of frame correlation values calculated by said frame correlation value calculating means and applying a result to said second storing means; and
said cell search apparatus further includes
scrambling code detecting means (73) for specifying said scrambling code among said specified group of synchronization codes.

15. A portable wireless terminal for digital wireless communication, comprising:
modem means (3a) for reception for demodulating received digital data; and
signal processing means (3b, 3c) for processing and outputting the signal received by said modem means for reception; wherein
said received digital data is a received signal sequence divided into frames each formed of a plurality of slots, each of said plurality of slots having been spread on a transmitting side by any of a plurality of combinations of a plurality of different synchronization codes of short periods, and each of said frames having been spread by any of a plurality of different scrambling codes of long periods, said plurality of different scrambling codes being classified into a plurality of groups corresponding to said plurality of combinations of the synchronization codes;
said modem means for reception includes a cell search apparatus (70) for detecting a start timing of said received signal sequence and specifying said scrambling code;
said cell search apparatus includes
slot timing detecting means (71) for detecting a start timing of said plurality of slots, and
frame timing detecting means (100) for detecting the start timing of said frame and for specifying a scrambling code group to which said scrambling code belongs;
said frame timing detecting means includes
slot correlation value calculating means (501) for calculating a plurality of slot correlation values using said plurality of different synchronization codes for each of said plurality of slots said start timing of which has been detected,
first maximum value detecting means (505) for detecting a maximum value among said plurality of slot correlation values of respective ones of said plurality of slots and for specifying combinations of synchronization codes correlated to said detected respective maximum values,
first storing means (506) for storing said specified combinations of synchronization codes,
synchronization code matching means (507) for successively comparing, by shifting said slots and at every shifting, the combinations of synchronization codes corresponding to the shifted plurality of slots stored in said first storing means with said plurality of combinations of synchronization codes, for specifying one having highest correlation with the combination of synchronization codes corresponding to said plurality of slots among the plurality of combinations of said synchronization codes,
second storing means (509) storing, by shifting said slots, a value representing said specified highest correlation specified at every shift,
determining means (510) for detecting a largest value among said values representing the highest correlation stored in said second storing means, for generating information defining a frame start timing based on corresponding shift of the slots, and for generating information specifying any of said plurality of combinations of corresponding said synchronization codes and specifying a group of scrambling codes corresponding to said specified combination of synchronization codes, and
deviation calculating means (504) for performing a deviation processing on said plurality of slot correlation values calculated by said slot correlation value calculating means and applying a result to said first maximum value detecting means; and
said cell search apparatus further includes
scrambling code detecting means (73) for specifying said scrambling code among said specified group of synchronization codes.

16. The portable wireless terminal according to claim 15, wherein
said first maximum value detecting means detects a largest value of said plurality of slot correlation values of respective ones of said plurality of slots to specify a first combination of the synchronization codes corresponding to said detected respective values, and detects a second largest value to specify a second combination of the synchronization codes corresponding to said detected respective values;
said first storing means stores said specified first and second combinations of the synchronization codes; and
said synchronization code matching means successively compares, by shifting said slots and at every shifting, each of the first and second combinations of the synchronization codes corresponding to the plurality of shifted slots stored in said first storing means with said plurality of combinations of the synchronization codes, to specify one of said plurality of combinations of the synchronization codes that has highest correlation with said first and second combinations of said synchronization codes.
